(19) Europäisches Patentamt
European Patent Office
Office européen des brevets

(11) **EP 1 171 689 B1**

(12) **EUROPEAN PATENT SPECIFICATION**

(45) Date of publication and mention of the grant of the patent:
**02.12.2009 Bulletin 2009/49**

(51) Int Cl.:
*F01B 9/04* *(2006.01)*    *F02B 75/32* *(2006.01)*
*F02B 75/22* *(2006.01)*    *F02B 75/24* *(2006.01)*
*F16H 21/36* *(2006.01)*    *F01B 1/08* *(2006.01)*

(21) Application number: **00913955.1**

(22) Date of filing: **03.04.2000**

(86) International application number:
**PCT/AU2000/000281**

(87) International publication number:
**WO 2000/060216 (12.10.2000 Gazette 2000/41)**

(54) **RECIPROCATING FLUID MACHINES**

KOLBEN-VERDRÄNGUNGSMASCHINE

MACHINES HYDRAULIQUES A PISTONS

(84) Designated Contracting States:
**AT BE CH CY DE DK ES FI FR GB GR IE IT LI LU MC NL PT SE**
Designated Extension States:
**LT LV RO SI**

(30) Priority:
**01.04.1999   AU PP957399**
**11.05.1999   AU PQ028799**
**04.06.1999   AU PQ079599**
**10.06.1999   AU PQ089599**
**15.07.1999   AU PQ165399**
**15.07.1999   AU PQ165499**
**30.07.1999   AU PQ195699**
**11.08.1999   AU PQ215099**
**13.08.1999   AU PQ220599**
**13.08.1999   AU PQ220699**
**19.08.1999   AU PQ234199**
**23.08.1999   AU PQ238899**
**24.08.1999   AU PQ240899**
**14.09.1999   AU PQ280899**
**14.09.1999   AU PQ280999**

(43) Date of publication of application:
**16.01.2002   Bulletin 2002/03**

(73) Proprietors:
• **Raffaele, Peter Robert**
  **Cremorne NSW 2090 (AU)**
• **Raffaele, Michael John**
  **Cremorne NSW 2090 (AU)**

(72) Inventors:
• **Raffaele, Peter Robert**
  **Cremorne NSW 2090 (AU)**
• **Raffaele, Michael John**
  **Cremorne NSW 2090 (AU)**

(74) Representative: **Gee, Steven William**
  **D.W. & S.W. Gee**
  **1 South Lynn Gardens**
  **London Road**
  **Shipston on Stour, Warwickshire CV36 4ER (GB)**

(56) References cited:
EP-A2- 0 241 243      WO-A1-90/06426
WO-A1-97/36096       DE-A- 2 361 228
DE-A1- 3 624 753      DE-A1- 4 408 646
DE-A1- 19 500 854     DE-A1- 19 725 227
FR-A- 2 438 746       GB-A- 200 704
GB-A- 678 677         US-A- 1 987 661
US-A- 3 258 992       US-A- 4 124 002
US-A- 4 173 151       US-A- 4 184 817
US-A- 4 738 230       US-A- 4 776 310
US-A- 5 402 755

• DATABASE WPI Derwent Publications Ltd., London, GB; Class Q52, AN 1987-234260/33 & SU 1 281 700 A (MELIKOV) 07 January 1987
• DATABASE WPI Derwent Publications Ltd., London, GB; Class Q51, AN 1998-202133/18 & JP 10 054 255 A (ISOYA) 24 February 1998
• DATABASE WPI Derwent Publications Ltd., London, GB; Class Q64, AN 1999-102401/09 & JP 10 331 940 A (AISHIN KIKO KK) 15 December 1998

**Description**

**Technical Field**

This invention relates to a variation of reciprocating fluid machines colloquially called "scotch yoke" devices. The invention relates in particular to a scotch yoke engine or pump

**Background Art**

Known scotch yoke devices include one or more pairs of horizontally opposed pistons reciprocating in respective cylinders. Each piston of a pair is rigidly attached to the other so the pair of pistons move as a single unit. The pistons reciprocate along parallel axes which may be coaxial or which may be offset. A crank is provided centrally of the pair of pistons with an offset mounted in a slider. The slider in turn is mounted in the piston assembly between opposing sliding surfaces, which extend perpendicularly to the axes of the pistons. The slider is thus constrained to move perpendicularly to the piston axes and so, as the crank rotates, the pistons are caused to reciprocate along the piston axis, with a true sinusoidal motion. In certain circumstances the provision of a true sinusoidal motion is preferable to the quasi-sinusoidal motion provided by a crank and connecting rod arrangement found in most internal combustion engines or pumps. However such devices have certain drawbacks. Neither the slider, which reciprocates in a vertical plane, nor the pistons, can be dynamically balanced by a rotating mass. Whilst this can be partially compensated for in a multi-pair device, this still leaves rocking couples.

Further in the conventional arrangement the slider slides between a single pair of opposed surfaces which lie on either side of the big end bearing. The pistons must be arranged along parallel axes and the distance between the sliding surfaces of the slider and the guide surfaces of the pistons must be larger than the diameter of the big end on the crank.

The present invention aims to at least ameliorate some of the disadvantages of the prior art and, in preferred forms, provides devices in which paired pistons are not rigidly connected together, are not necessarily coaxial and in which better dynamic balancing is achieved.

The invention also allows use of uneven numbers of pistons mounted on a single big end bearing pin.

In its broadest form the invention in effect decouples the pistons from each other and provides each piston with its own pair or group of sliding surfaces and its own slider. The sliding surfaces for each piston do not lie on either side of the big end but are positioned remote from the big end. The sliding surfaces may be compound surfaces. This decoupling means that each piston is not relying on the coupling with the other piston or pistons to move in both directions and allows each piston to move along a separate axis and at a different phase to all other pistons. Whilst pistons may be interconnected via a common linkage which carries the various sliding surfaces, the pistons are not rigidly connected together. Thus a V- configuration may be achieved with a pair of pistons or a 120° layout with three pistons, for instance.

**Disclosure of the Invention**

In one broad form the invention provides a scotch yoke engine or pump including:

a crankshaft having a main axis and having a big end bearing pin which has a big end bearing pin axis, the crankshaft adapted for rotation about the main axis and the big end bearing pin being adapted to orbit the main axis during crankshaft rotation, the big end bearing pin adapted to sweep a first volume as it orbits the main axis;

connecting means rotatably mounted on the big end bearing pin and adapted to orbit the main axis during crankshaft rotation;

a cylinder having a cylinder axis, the cylinder axis being perpendicular to the main axis;

a piston having a piston axis and including:

(a) a piston crown having a cross sectional area perpendicular to the piston axis;
(b) first guide means elongate along an axis extending perpendicular to the piston axis;
(c) second guide means elongate along an axis extending parallel to the piston axis and having a first end and a second end;

the piston mounted for reciprocation along the piston axis;

a second volume defined by a projection of the piston crown cross sectional area along the piston axis in the direction of the crankshaft

the first guide means being located only to that side of the big end bearing pin axis lying between the big end bearing pin axis and the piston crown;

the first guide means engaging the connecting means whereby the connecting means is constrained to reciprocate along the first guide means during crankshaft rotation;

a crank case or block including third guide means adapted to engage the second guide means, the second guide means and the third guide means cooperating to substantially prevent rotation of the piston around an axis parallel to the main axis;

**characterized in that:**

(i) the second guide means and the third guide means are located for engagement only within the second volume;

(ii) the second guide means is positioned to a side of the first guide means, the first end of the second guide means is located closer to the piston crown than is the first guide means, and when the piston is at TDC the second end of the second guide means is located closer to the big end bearing pin axis than is the first guide means; and

(iii) the second guide means is adapted to be moved in and out of the first volume during crankshaft rotation such that the second guide means is outside the first volume when the piston is at TDC.

The first guide means is elongate along an axis extending substantially perpendicular to the piston axis. By this is meant that the first guide means may deviate from true perpendicular by up to 5° either way. The first guide means can engage the connecting means by way of two or more parallel linear surfaces which correspond to and slide relative to the first guide means. Alternatively, the engagement may include two or more roller bearings or the like.

In preferred forms there are two or three pistons mounted on connecting means on each big end bearing. The pistons may be arranged at equal angles about the main axis if desired.

The first guide means may be integral with the piston or may be located on a separate structure attached to the piston. Where a separate structure is provided, it may be pivotally mounted to the piston, preferably using a gudgeon pin arrangement. This allows one to use conventional pistons with connecting rods incorporating the first guide means.

The crankshaft may be fixed relative to the cylinders or may be movable so as to alter the compression ratio and/or the timing of the pistons in the cylinders. In a V-configuration, movement of the crankshaft along the bisector of the included angle between the cylinders results in a change in compression ratio without any change in phase. The main axis of the crank mechanism preferably moves along a linear path but may alternatively move along an arc. The alternative arrangement provides for the crankshaft axis to rotate about a distant axis, so raising or lowering the crankshaft. These arrangements may be used with a single piston engine. Movement of the crank may be in any direction.

When two pistons per big end bearing are utilised, the pistons may be arranged in a V-configuration. The V-configuration may be at any angle, such as 90 °, 60 °, 72° or any other desired angle. The number of pistons per big end bearing is only constrained by physical size limitations. Each big end bearing may have a single connecting means upon which multiple pistons are mounted or there may be a multiple connecting means mounted on each big end bearing with each connecting means having an associated piston mounted upon it.

When multiple pistons are mounted to one big end bearing, they may be located the same distance from the main axis or different pistons may be at different distances from the main axis.

Whilst the first guide means and the complementary engagement surfaces of the connecting means are preferably simple planar surfaces in cross section, other configurations are possible, toprovide additional locating surfaces perpendicular to the line of the first guide means.

Preferably the crankshaft includes a counter weight which substantially and/or dynamically balances the mass of the connecting means relative to the main axis.

Preferably the orbit of the big end bearing pin around the main axis is a circle, but it may be elliptical.

Preferably the motion of each of the pistons is simple harmonic motion.

The connecting means may have non-rotary motion relative to the piston. Preferably there is no rotary motion whatsoever, except as allowed by clearances.

The second guide means is intended to alleviate "jamming" of the piston in the cylinder, which can provide a problem at high temperature. It is desirable to maintain the piston so that it is aligned with the piston axis. Several preferred embodiments of the second guide means are described in connection with the drawings. It will be appreciated that because the second guide means and the third guide means are located for engagement within the second volume, i.e. within the "footprint" of the piston, metallic mass of the fluid device is minimised. Furthermore, the size of the engine or pump can be minimised.

As will be seen from the drawings, in some embodiments, the second guide means is formed in pairs and a line drawn from one member to the other of the pair would be perpendicular to the centre line of the bisection formed by the first guide means. In other embodiments, preferably the second guide means includes members which are located to either side of the bisection formed by the first guide means but not along the centre line of the first guide means.

Intermediate connecting means can be provided to interconnect the piston and the connecting means. The intermediate connecting means preferably engage in or with first guide means to stabilise the piston in the cylinder. The position of the intermediate connecting means relative to the piston or the connecting means or both may be adjusted. The means for adjusting the position of the intermediate connecting means may be movable transversely or longitudinally relative to the cylinder axis or both. The means for adjusting the position of the intermediate connecting means may include a linear, single radius curved or multi-radius curved slot/s, groove/s, surface/s or the like. The intermediate means may include sliding or rolling contact members to engage the means for adjusting the position of the intermediate connecting means.

The means for adjusting the position of the intermediate connecting means may be movable to change the effective stroke of the pistons, the effective compression ratio of the device or the position/time path followed by the pistons or a combination of any of the foregoing.

The means for adjusting the position of the intermediate connecting means may include a compressible connecting rod or compressible elements separate from the connecting rod.

There is proposed a scotch yoke engine or pump in which each piston may be decoupled from any other piston mounted on the same big end bearing pin of a crankshaft, so allowing each piston to move along a cylinder axis which may be at an angle to any other cylinder axis. In producing such devices it has been discovered that the pistons may be rotated in the cylinders about an axis generally perpendicular to the cylinder axis, causing damage to the device. To prevent this occurring the present invention uses second guide means mounted on, connected to or integral with the piston to maintain the piston in a correct orientation and to prevent unwanted rotation or deflection of the piston. The second guide means and the third guide means are located for engagement only within the second volume, i.e. the volume defined by a projection of the piston crown cross sectional area along the piston axis in the direction of the crankshaft. However, the second guide meansmay extend out of this volume. The first and second guide means may be formed integral with the piston body or may be one or more separate items attached to the piston body. Where the guide means are separate units, a single unit may be provided which is rigidly or pivotably mounted to the piston body. The second guide means may include one or more guide members, including tubes or rods, which extend substantially parallel to the piston axis. Where the second guide means includes two or more guide members, these guide members may be located symmetrically or asymmetrically relative to the piston's cross sectional centre.

Preferably the first guide means extends through the centre of the piston's cross sectional area.

Where two or more pistons are mounted on one big end bearing pin, the pistons may lie in a single plane or may lie in two or more planes.

The engine or pump may be fully or substantially statically or dynamically balanced or both about the main axis. It will be appreciated that whilst balancing of pistons mounted on a single crankshaft is the norm, balancing of a scotch yoke engine or pump with pistons mounted on separate big end bearing pins is possible if the big end bearing pins are coaxial.

It has been found that because each piston is not directly connected to any other piston, there is a tendency for the pistons to rotate in the cylinders about an axis generally parallel the main axis. This can lead to destructive failure of the device. Providing second guide means, extending parallel to the cylinder axis, prevents such rotation,. It has been discovered that the second guide means can be positioned so that at various parts of the cycle they extend into the first volume swept by the big end bearing pin. This results in a more compact device.

It has been found that decoupled, paired piston/s, scotch yoke devices of our invention may be balanced perfectly in that the centre of mass of the moving parts of the engine (the crankshaft, the pistons and their members, and any interconnecting members between the crankshaft's big end bearing pins and the pistons) remains exactly stationary and centred on the main axis as the device members rotate, orbit and reciprocate through its cycle. We have found that a pair of pistons arranged at 90 degrees to each other and sharing the same big end axis may be perfectly balanced. It has been found that a pair of pistons arranged at 90 degrees to each other and having coaxial big end bearing pins, similarly may be perfectly balanced (although in this embodiment a rocking couple may be set up).

An engine that is of a V-configuration that is other than 90 degrees may be balanced perfectly as well.

This may be achieved by splitting the big end so that there are two big end axes per pair of reciprocating masses, ie, pistons. The two big ends axes are angularly displaced from one another about the main axis.

### Brief Description of the Drawings

The invention shall be better understood from the following, non-limiting description of preferred forms of the invention, in which:

Figure 1 is a cross-sectional view of a fluid machine which is not according to the invention.

Figure 2 shows a partial cutaway perspective view of a second design which is not according to the invention.

Figure 3 shows an end view of a connecting device of the fig 2 design.

Figure 4 shows a perspective view of the fig 3 device.

Figure 5 shows an end view of a variation of the Figure 1 design

Figure 6 shows an end view of third design.

Figure 7 shows a perspective view of a fourth design.

Figure 8 shows an end view of the Figure 7 design.

Figure 9 shows an end view of a fifth design.

Figure 10 shows an end view of a sixth design.

Figures 11 to 23 and 26-42 show various configurations of the first guide means and the cooperating engagement surfaces of the connecting means.

Figure 24 shows another design of an engine which is not according to the present invention.

Figure 25 shows a schematic layout of a V-twin configuration engine or pump.

Figure 43 is a perspective view of a piston made according to the invention.

Figures 44 is a perspective view of the Figures 81 piston taken from a different angle.

Figures 45 is a perspective view of an engine or pump incorporating the piston of Figures 43 and 44.

Figures 46 is a detailed view of a portion of the device of Figures 45.

Figures 47 to 88 show underside plan views of various pistons for use in an engine or pump according to the invention.

Figures 89 to 91 show isometric views of a further piston for use in an engine or pump according to the invention.

Figures 92 to 94 show isometric views of a further piston for use in an engine or pump according to the invention.

Figures 95 to 97 show isometric views of a further piston for use in an engine or pump according to the invention.

Figures 98 to 100 show isometric views of a further piston for use in an engine or pump according to the invention.

Figures 101 to 103 show isometric views of a further piston for use in an engine or pump according to the invention.

Figures 104 to 106 show isometric views of a further piston for use in an engine or pump according to the invention.

Figures 107 to 109 show isometric views of a further piston for use in an engine or pump according to the invention.

Figures 110 to 112 show isometric views of a further piston for use in an engine or pump according to the invention.

Figures 113 to 115 show isometric views of a further piston for use in an engine or pump according to the invention.

Figures 116 to 118 show isometric views of a further piston for use in an engine or pump according to the invention.

Figures 119 to 121 show isometric views of a further piston for use in an engine or pump according to the invention.

Figures 122 to 124 show isometric views of a further piston for use in an engine or pump according to the invention.

Figures 125 to 127 show isometric views of a further piston for use in an engine or pump according to the invention.

Figures 128 to 130 show isometric views of a further piston for use in an engine or pump according to the invention.

Figures 131 to 133 show isometric views of a further piston for use in an engine or pump according to the invention.

Figures 134 to 136 show isometric views of a further piston for use in an engine or pump according to the invention.

Figures 137 to 139 show isometric views of a further piston for use in an engine or pump according to the invention.

Figures 140 to 142 show isometric views of a further piston for use in an engine or pump according to the invention.

Figures 143 to 145 show isometric views of a further piston for use in an engine or pump according to the invention.

Figures 146 to 148 show isometric views of a further piston for use in an engine or pump according to the invention.

Figures 149 to 151 show isometric views of a further piston for use in an engine or pump according to the invention.

Figures 152 to 154 show isometric views of a further piston for use in an engine or pump according to the invention.

Figures 155 to 157 show isometric views of a further piston for use in an engine or pump according to the invention.

Figure 158 is a cross-sectional view of an engine or pump which is not according to the invention.

Figure 159 is a cross-sectional view of an engine or pump which is not according to the invention.

Figure 160 is a cross-sectional view of an engine or pump which is not according to the invention.

Figure 161 is a cross-sectional view of an engine or pump which is not according to the invention.

Figure 162 is a cross-sectional view of an engine or pump which is not according to the invention.

Figure 163 is a cross-sectional view of an engine or pump which is not according to invention.

Figure 164 is a cross-sectional view of an engine or pump which is not according to the invention.

Figure 165 is a cross-sectional view of an engine or pump which is not according to the invention.

Figure 166 is a cross-sectional view of an engine or pump which is not according to the invention.

Figure 167 is a cross-sectional view of an engine or pump which is not according to the invention.

Figure 168 is a cross-sectional view of an engine or pump which is not according to the invention.

Figure 169 is a cross-sectional view of the figure 208 design in a different position.

Figure 170 is an end view of an embodiment of the invention at a first position during its cycle.

Figures 171 to 173 are end views of the embodiment of Figure 210 at different stages of its cycle.

Figure 174 shows a view of the embodiment taken perpendicular to one of the cylinder axes at a position corresponding to bottom dead centre for one of the pistons.

Figure 175 shows a view of the embodiment similar to that of Figure 214 but at top dead centre.

Figure 176 shows a perspective view of the embodiment.

Figure 177 shows an expanded view of part of Figure 226.

Figure 178 is an isometric view of a crankshaft with a pair of split big ends.

Figures 179 to 183 show perspective conceptual views of various yoke constructions.

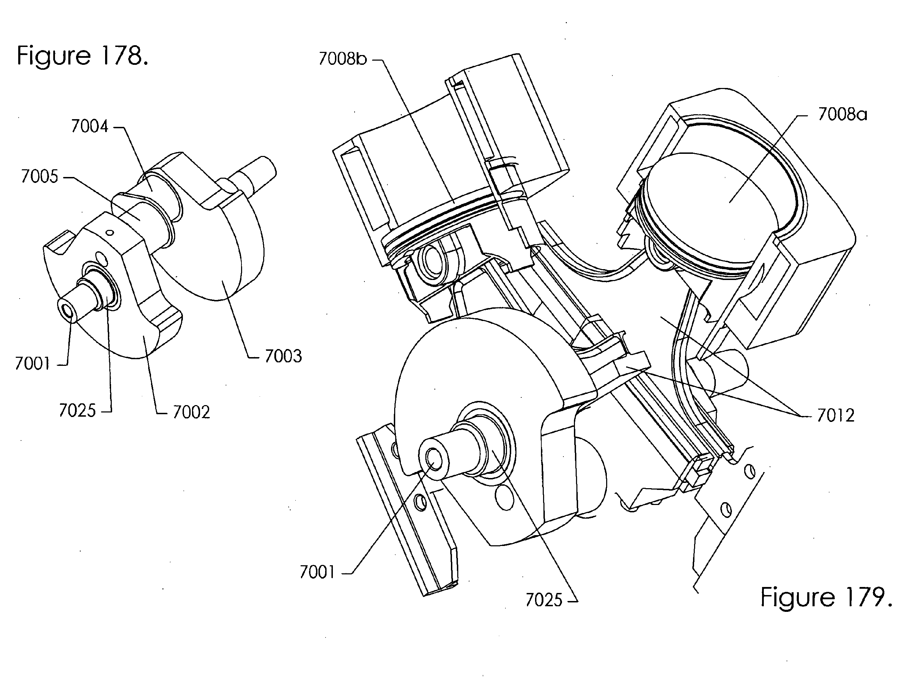

Figure 179 is a perspective view of a V-configuration scotch yoke device which is not according to the invention, wherein the big ends are coaxial and the pistons are disposed for reciprocation at 75 degrees to each other about the main axis.

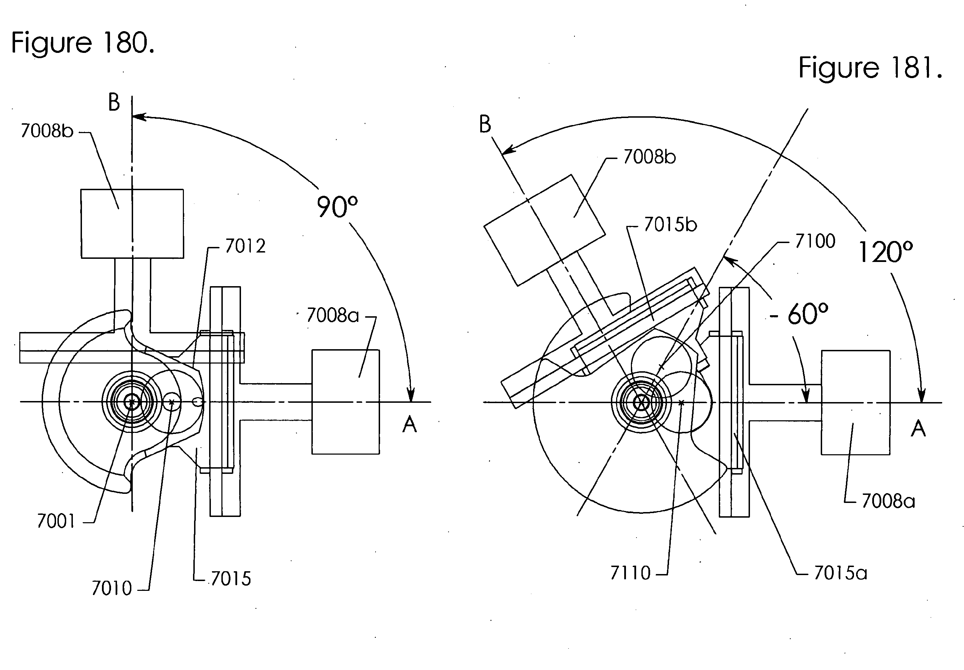

Figure 180 is an end view of a V-configuration scotch yoke device which is not according to the invention wherein the pistons are disposed for reciprocation at 90 degrees to each other about the main axis.

Figure 181 is an end view of a V-configuration scotch yoke device which is not according to the invention wherein the pistons are disposed for reciprocation at 120 degrees to each other about the main axis.

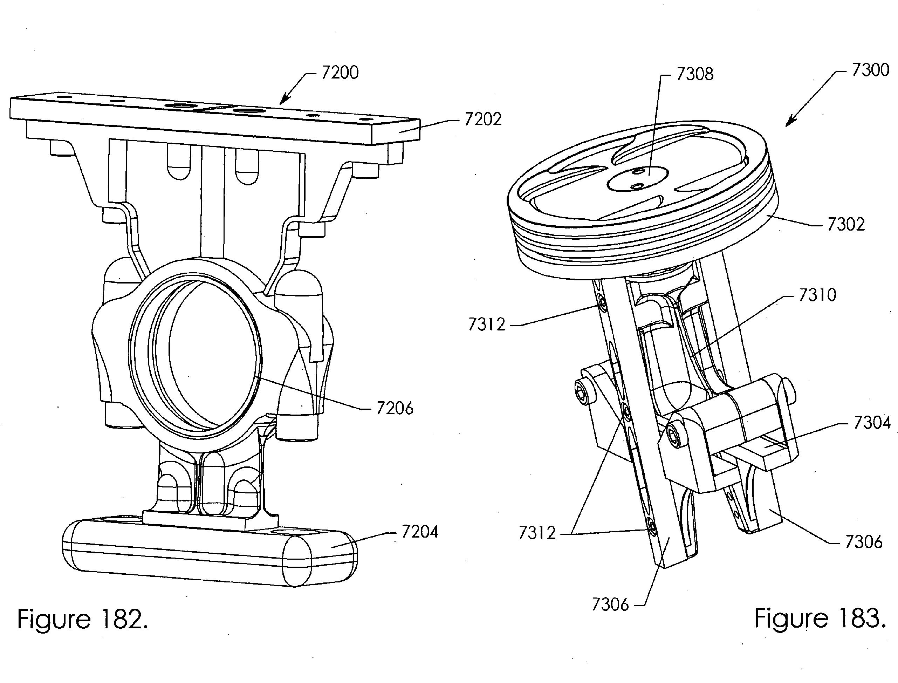

Figure 182 is a perspective view of a connecting rod designed to be attached to a single piston assembly according to the invention.

Figure 183 is a perspective view of a single piston assembly for use in an engine or pump according to the present invention, and designed to be attached to the connecting rod of figure 182.

**Best Mode of Carrying out the Invention**

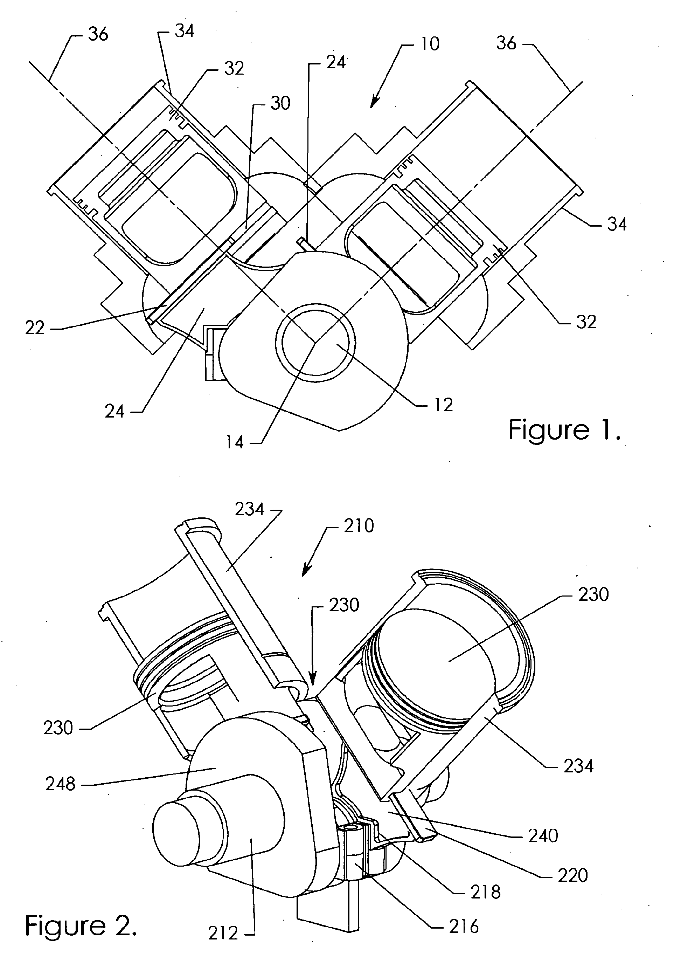

Referring to Figure 1 there is shown a scotch yoke engine or pump 10 which includes a crank 12 mounted for rotation about a crank axis 14. The crank 12 has an offset bearing pin 16, radially distant from the axis 14. Thus as the crank 12 rotates about axis 14, pin 16 will describe a circular orbit around axis 14.

Rotatably mounted on bearing pin 16 is a connecting means or slider 18. The slider has two tongues 20, 22.

The slider 18 extends generally perpendicular to the axis 14 whilst the tongues extend generally parallel to the axis 14. As best seen in Figure 2 the sliding surfaces extend axially on either side of the main portion 24 of the slider and so form a T-shaped construction.

Each of the tongues 20, 22 engages in a T-shaped slot 30 of a respective piston 32, the T-shaped slot 30 providing the first guide means. Each piston is mounted in a cylinder 34 and constrained for linear movement along respective cylinder axis 36. The slot 30 extends substantially perpendicular to the cylinder axis 36 and extends diametrically across the centre of the piston. Both ends of the slot 30 are open. The slider can thus move sideways relative to the piston but must move axially with the piston..

The piston is constrained to move along its piston axis and as the crank 12 rotates the slider 18 rotates about the crank axis 14. The motion of each tongue has a component parallel to the respective piston axis and a component perpendicular to the respective piston axis. Thus, the pistons reciprocate in their respective cylinders with the tongues sliding sideways in their respective slots 30. The combination of the linear movement of the piston and the tongue in the slot maintains the slider 18 in a constant orientation as the crank rotates, irrespective of other pistons. In the design of Figure 1, there are provided two pistons at 90° to each other, but since the slider 18 maintains its orientation as it orbits the crank axis, the angle between the pistons may be other than 90°. Similarly more pistons may be added.

Because each of the pistons is decoupled from any other piston, the orientation and position of the pistons may be chosen as desired. There is no need for the piston axes to extend radially from the crankshaft axis (or main axis). The piston axes may extend radially from an axis, but this axis may be remote from the crankshaft axis. The piston axes may be parallel and spaced from each other on either side of the crank axis.

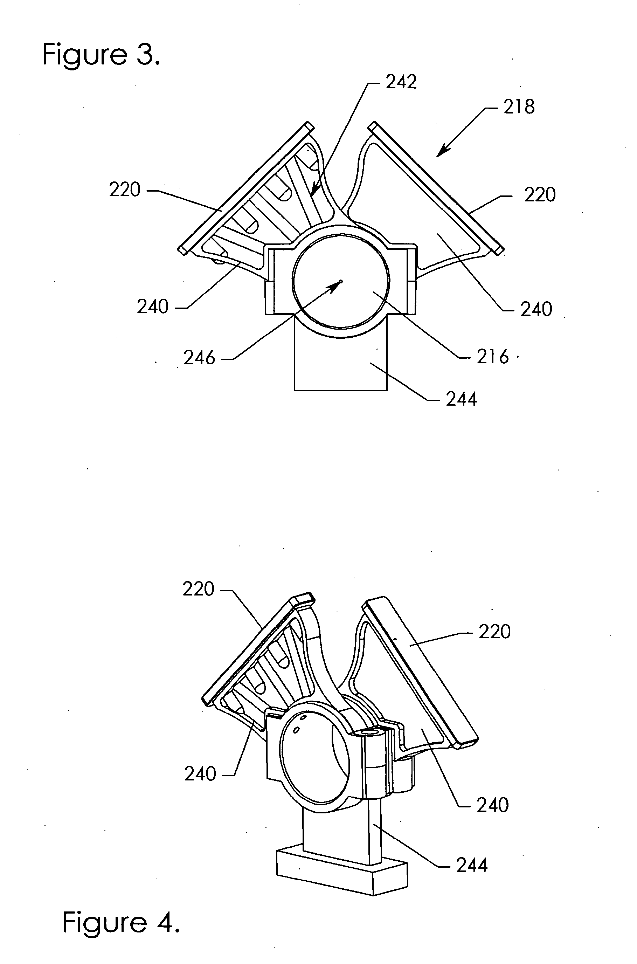

Referring to figures 2 to 4 there is shown a reciprocating piston device 210 having two pistons 230 reciprocating in respective cylinders 234 at 90° to each other. A connecting means 218 connects the two pistons to big end bearing pin 216 of crankshaft 212 via tongues 220 and slots 230 in the pistons 232. The connecting means 218 has two webs 240, one for each piston, which are offset axially relative to each other. This allows the pistons 232 to overlap each other and so be brought closer to the main axis (not numbered). Lubrication ducts 242 are provided to supply pressurised oil from the big end bearing pin 216 to the sliding surfaces of the tongues 220 and slots 230.

The connecting means 218 includes a counter weight 244 which extends downwardly on the opposite side of the big end bearing pin 216, bisecting the angle between the two webs 240. This counter weight 244 is sized so that the centre of inertia and preferably also the centre of mass of the connecting means 218 lies on the big end bearing pin axis 246. It will be appreciated that when the pistons are spaced equally about the main axis that the webs 240 will balance each other and a separate counter weight may not be needed.

As the connecting means orbits the main axis no rotational forces are generated relative to the big end axis 246, which would cause the connecting device to attempt to rotate about the big end bearing pin and which would need counter turning forces to be generated at the slot 230 / tongue 220 interface. In addition, since the centre of inertia of the connecting means remains on the big end bearing pin axis 246, it is a relatively simple matter of adding an appropriate amount of mass to the counter weight 248 on the crankshaft 212 diametrically opposite the big end bearing pin axis 246 to provide a dynamically balanced crankshaft/connecting device combination. It will be appreciated that for other piston arrangements that so long as the connecting means' centre of inertia lies on the big end bearing pin axis 246, then it may be dynamically balanced.

This leaves the reciprocating mass of the pistons. The velocity of the pistons follows a pure sinusoidal path and in combination the two pistons are the equivalent of a single rotating mass. This may be balanced by adding an appropriate mass to the crankshaft, thereby resulting in a dynamically balanced device. For a V-twin configuration, a single piston mass is added to the back of the crankshaft. For a four piston star configuration, two piston masses are added to the crankshaft counter weight.

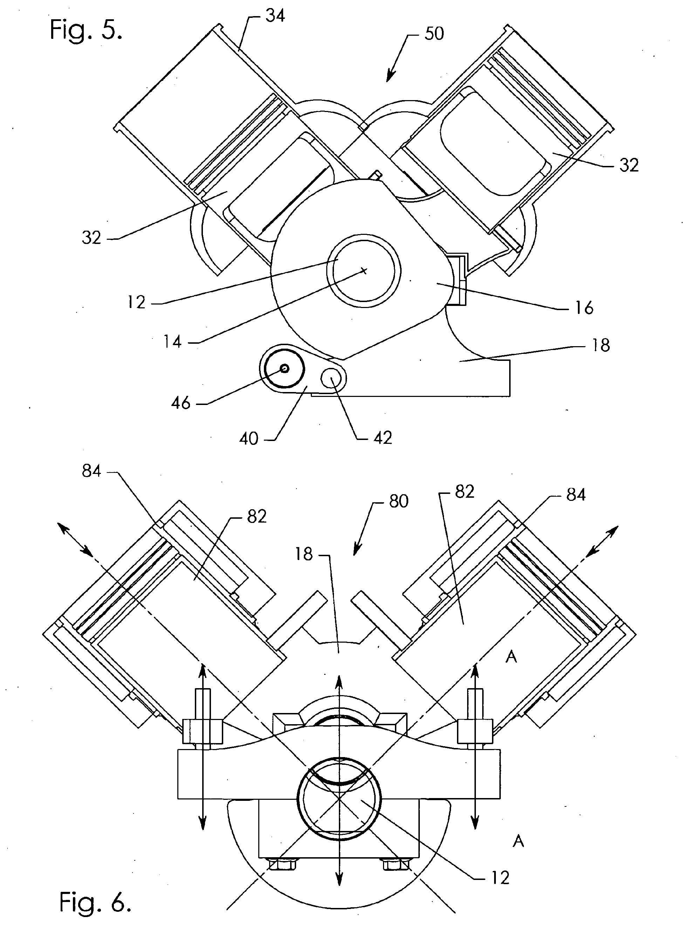

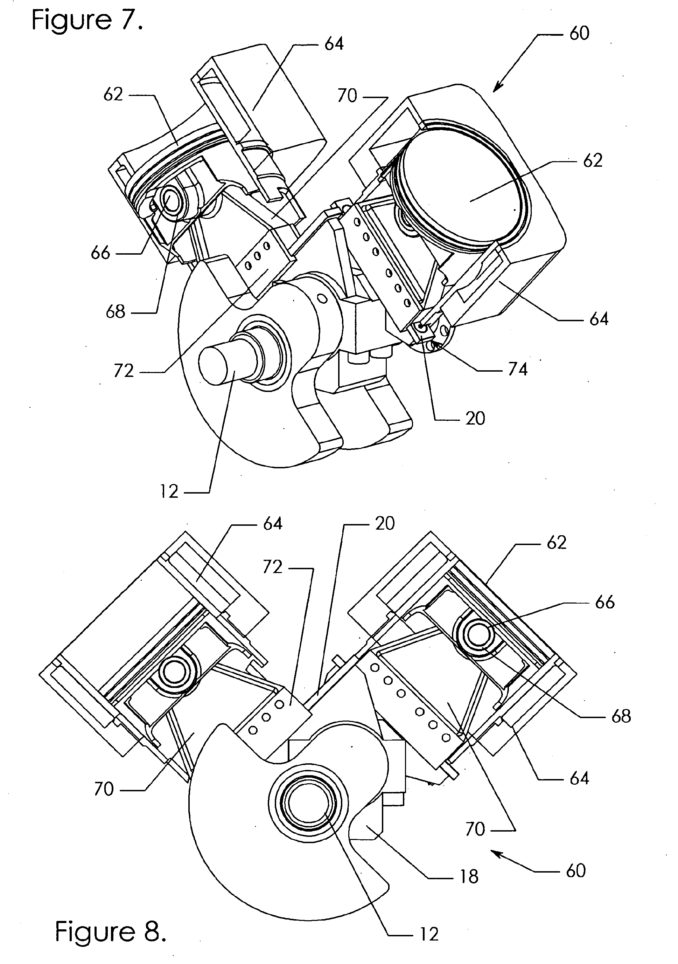

Referring to figure 5, there is shown a fluid device 50 which is a variation on the figure 1 design . For clarity the same numbers are used for the same components. The combination of the piston 32 being limited to linear motion along the piston axis 36 and the respective tongue 20 being limited to linear motion relative to the piston 32 theoretically prevents any rotation of the connecting means 18 relative to the piston 32. However, due to the need for manufacturing tolerances, there will inevitably be some free-play and hence turning of the connecting means 18 relative to the pistons 32. This in turn will generate turning forces at the interfaces of the tongues 20 with the slots 30. To alleviate this, the device in figure 8 is provided with a linkage 40. One end of this linkage 40 is pivotably connected to the connecting means 18 at 42 and its other end is pivotably connected to the crankcase (not shown) at 44. The linkage 40, connecting means 18, crankshaft 12 and crankcase thus form a four bar linkage. The distance between the two pivot points 42,44 is the same as the separation of the crankshaft axis 14 from the big end bearing pin axis 46. Thus, irrespective of the restriction imposed by the engagement of the connecting means 18 with the pistons 32, the connecting means is constrained to orbit about crankshaft axis 14 without changing its orientation.

Referring to Figures 7 & 8 there is shown a twin cylinder fluid device 60 having pistons 62 reciprocating in cylinders 64. The pistons 62 are each provided with a gudgeon pin 66 mounted in a bearing 68 on the respective piston. Mounted on the gudgeon pin 66 is a connecting rod 70. However, the connecting rod 70 does not mount on the big end bearing pin of the crankshaft 12, but on the connecting means 18. The lower end 72 of the respective connecting rod 70 is provided with a T-shaped slot 74 which receives the T-shaped tongues 20 of the connecting means 18. Whilst the connecting rod 70 is free to rotate about the gudgeon pin 66 relative to the piston, the combination of the planar mating surfaces of the slots 74 and tongues 20 prevents any pivoting and so the connecting rod 70 and connecting means 18 move as a single unit. Whilst this may appear to introduce unnecessary complication to the structure, it does allow one to use conventional pistons.

Referring to figure 6, there is shown a twin cylinder fluid device 80 with twin pistons 82 mounted on connecting means 18 in cylinders 84. The connecting means 18 is mounted on a crankshaft 12, but the main axis 14 of the crankshaft is not fixed relative to the cylinders 84. Instead, the crankshaft 12, and with it connecting means 18 and pistons 82 may be moved upwards or downwards, as indicated by the arrows. The vertical movement of the crankshaft 12 raises the pistons in the cylinders 84 and thus provides the ability to vary the compression ratio on the fly, i.e. during operation. Movement of the crankshaft 12 does not affect the timing of the pistons in the cylinders 84 relative to the crankshaft 12 or to each other. This is in contrast to conventional V-configuration engines which if provided with movable cranks, causes the timing of the pistons to vary, with one piston being advanced and the other retarded.

Vertical movement of the crankshaft 12 may be achieved utilising conventional means, such as hydraulic rams or the like.

It will be appreciated that a movable crankshaft may be utilised with a single piston and that the movable crankshaft may be moved along paths other than the bisector in a V- twin engine, for example. The crankshaft may be moved at a, say, 15° to the vertical. This has no effect other than to need more crankshaft movement to achieve the same change in compression ratio.

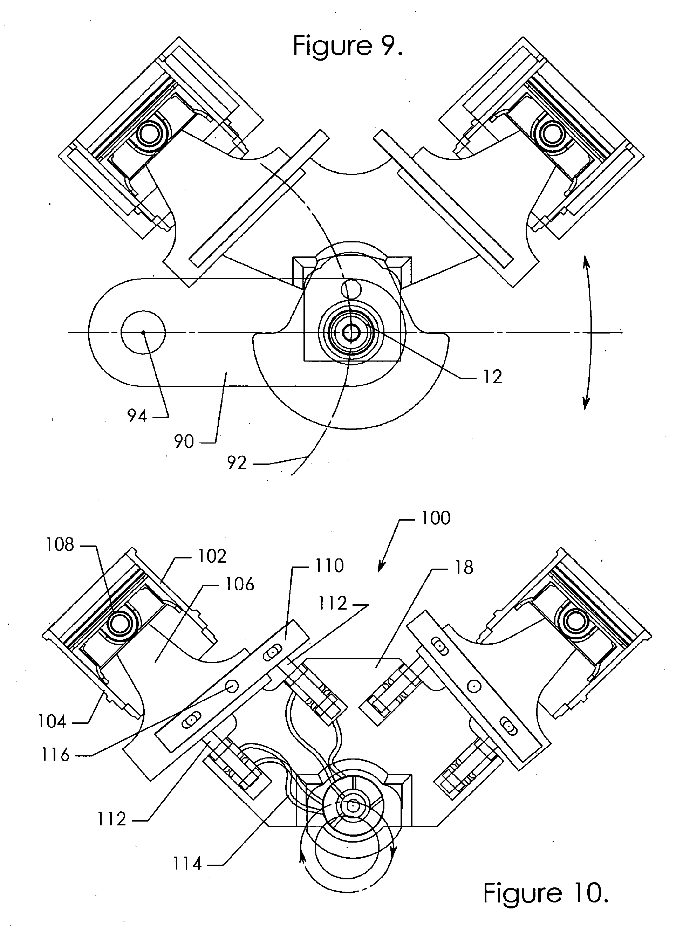

Figure 9 shows a variation of the figure 6 design, in which the crankshaft 12 is mounted on bearing arms 90. The crankshaft engages a gear 92, which may be connected to a gearbox in the case of an engine. The gear 92 has an axis of rotation 94. The bearing arms 90 are pivotably mounted on the crankcase about axes which are coaxial with the axis 94. The bearing arms may be rotated about the axis 94 by suitable means to raise or lower the crankshaft relative to the cylinders. Whilst this does cause a sideways movement of the crankshaft, and so advancement and retardation of the pistons, this is very slight.

Figure 10 shows a further design, again not according to the invention, in which there is a twin cylinder device 100 with pistons 102 reciprocating in cylinders 104. The pistons have connecting rods 106 pivotably mounted on gudgeon pins 108. The lower end of the connecting rod is provided with two opposed parallel surfaces in which a slider 110 is mounted. The opposite ends of the slider 110 are connected to hydraulically operated rams 112. These rams 112 are incorporated within the connecting means 18 and are selectively supplied with high pressure oil via ducts 114. The rams 112 are thus capable of causing the slider 110 to pivot about its centre 116, to raise or lower relative to the connecting means 118, and hence relative to the cylinder, or a combination of both. This causes the piston to rise or fall relative to the respective cylinder and/or for the connecting rod 106 to pivot about gudgeon pin 108, so altering the phase of the piston.

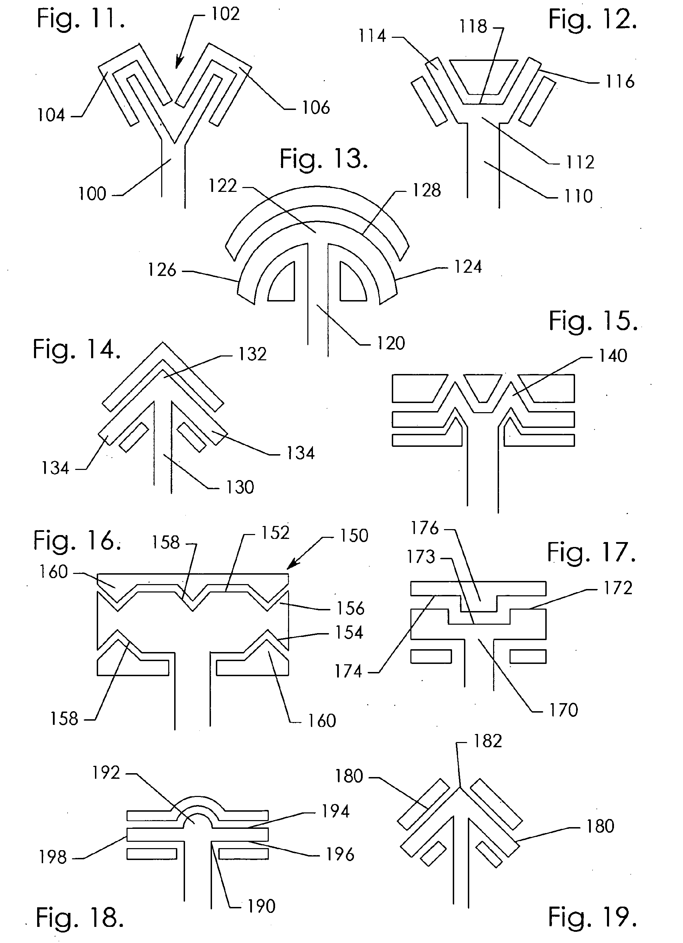

Figures 11 to 23 show a number of variations of the first guide means of the piston and the corresponding engagement surfaces on the connecting means.

Figure 11 shows a slider 100 having a Y-shaped engagement surface 102 for engagement with two pairs of surfaces 104, 106 of a single piston.

Figure 12 shows a slider 110 having engagement means 112. This surface 112 is Y-shaped but has surfaces 114, 116 extending from base 118.

Figure 13 shows a slider 120 having engagement means 122. The engagement means in cross section is T-shaped with two arms 124, 126. These arms 124, 126, in cross section, form a curved upper surface 128.

Figure 14 shows a slider 130 having an arrow-headed engagement means 132. The engagement means 132 has two downwardly extending and diverging arms 134 which are engaged by the piston.

Figure 15 shows a W-shaped engagement means 140.

Figure 16 shows a T-shaped engagement means 150 but the upper and lower surfaces 152, 154 of the arms 156 are provided with V-shaped grooves 158, in which V-shaped protrusions 160 extend. The V-shaped grooves 158 and protrusions 160 may be located on the other of the piston and connecting means.

Figure 17 shows a T-shaped engagement means 170 having an upper surface 172 with a slot 173 located centrally therein. The corresponding surface 174 of the piston includes a rectangular shaped protrusion 176 which extends into the slot.

Figure 18 shows a T-shaped engagement means 190 having a semi-circular protrusion 192 located centrally on the upper surface 194. The protrusion 192 need not be located centrally and there may be additional protrusions located on one or both sides of the centre of engagement means, either on the upper surface 194, the lower surfaces 196, 198, or both.

The device of Figure 19 is similar to that of Figure 14 except that the upper engagement surface 180 of the piston is not continuous but is provided with an opening 182.

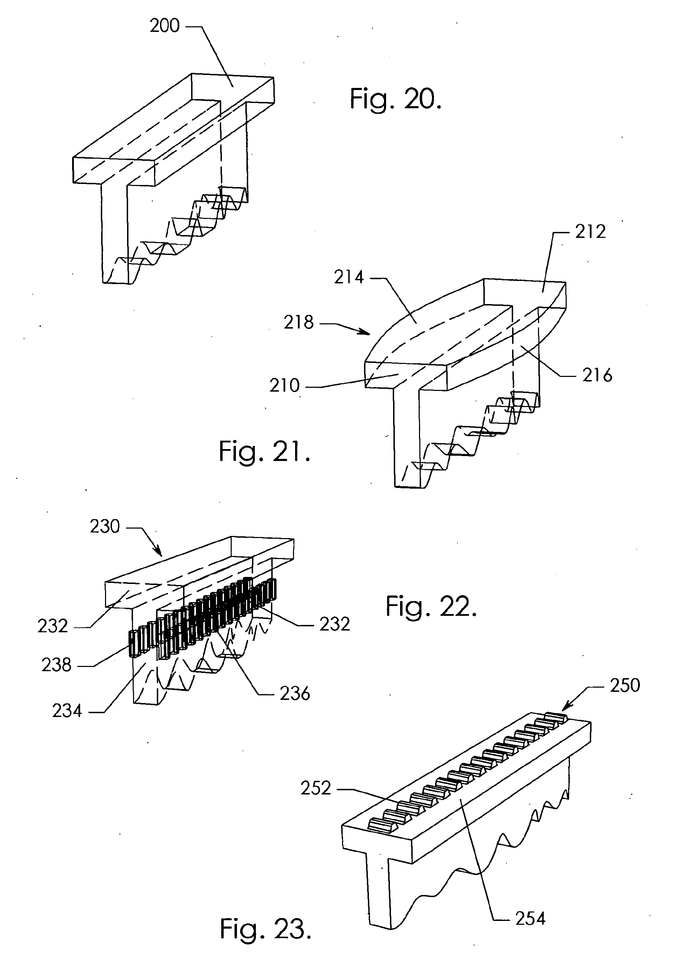

Figure 20 shows a T-shaped engagement means 200.

Figure 21 shows a T-shaped engagement means 210 having arms 212 and 214. The side surfaces 216, 218 of the arms are curved, so the width between the surfaces 216 and 218 is greater at the centre of the engagement means than at either end. It will be appreciated that the width of the corresponding slot in the piston will need to be at least as wide as the widest part of the two arms.

Figure 22 shows a T-shaped engagement means 230 having arms 232 and central leg 234. The leg 234 is provided with linear gears 236, 238 on its two surfaces. These gears 236, 238 may be used to drive, via rotatable gears mounted on the piston, other devices.

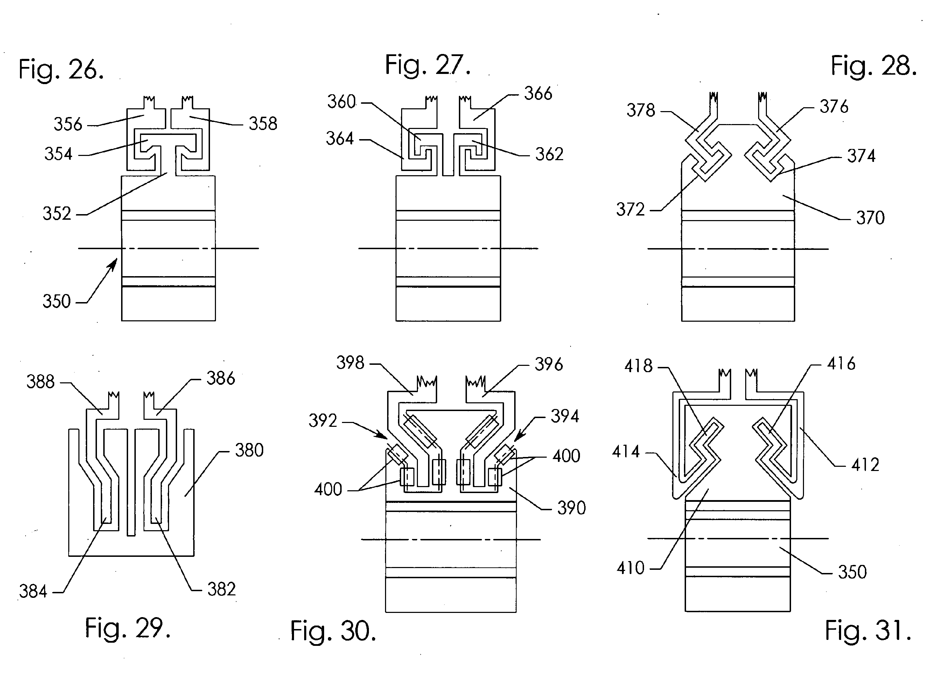

Figure 23 shows a T-shaped engagement means 250 having a centrally located linear gear 252 on the upper surface 254. As with the figure 26 device, this gear may be used to drive devices mounted on or in the piston.

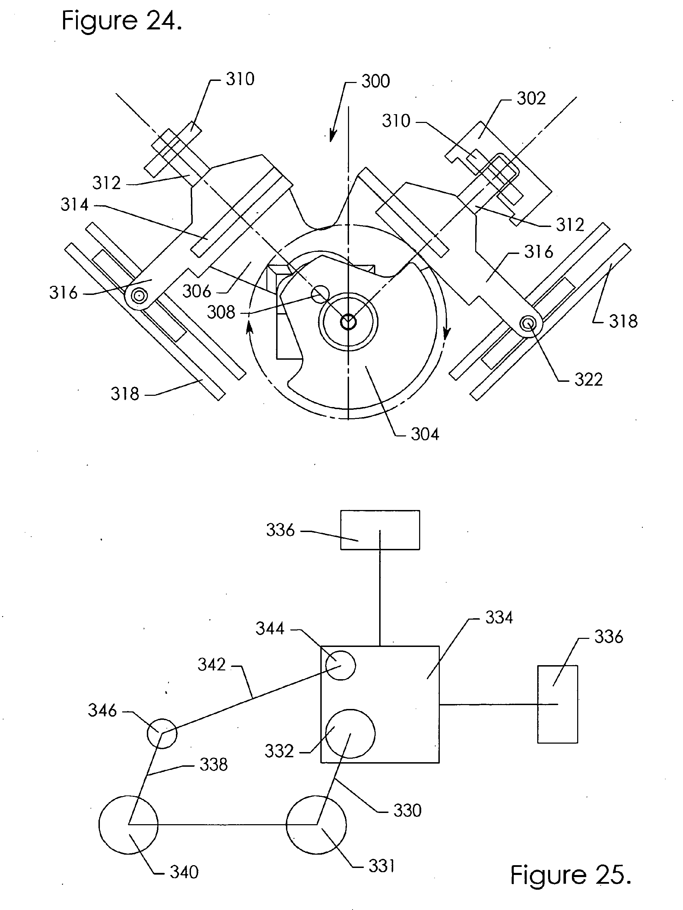

Figure 24 shows a V-twin engine 300 having pistons 302, crankshaft 304 and connecting means 306 mounted on the big end bearing pin 308 of the crankshaft 304. The pistons are conventional pistons in having a gudgeon pin 310 on which is rotatably mounted a connecting rod 312. However the connecting rods 312 have a slot 314 at their lower end in which the connecting means 306 engages.

The connecting rods each have a sideways extending arm 316 which engages a further slider 318 which slides in guides 320 parallel to the respective cylinder axis. The connecting rod may be integral with the further slider 318 or it may be connected by way of a pivotable joint 322, as shown. The joint 322 may be a single axis joint or a ball type joint. In the design shown the arms 316 extend parallel to the slots 314. However they may extend at any angle.

The guides 318 aid in stabilising the respective piston because the tolerances required can result in the piston rotating very slightly in the bore and cause seizing or the like. If very tight tolerances are used, the guides may not be needed. The further sliders 318 may be integral with the crankcase or may be separate items attached to the crankcase by way of bolts and the like

The gudgeon pins of the pistons may be at 90° to the crankshaft axis as no rotational movement of the connecting rod relative to the piston will occur. Use of the pistons with gudgeon pins allows one to use "off the shelf" pistons.

Figure 25 shows a schematic layout of a V-twin engine having a primary crankshaft 330, a big end bearing pin 332 and a connecting means 334 mounted on the big end. Pistons 336 are mounted on the connecting means 334 as in the previous embodiments.

A slave crank, 338 is provided which rotates about an axis 340 parallel to the axis 331 of the primary crank. A link 342 is pivotably mounted on both the connecting means 334 at 344 and the slave crank 338 at 346. The distance of pivot point 346 from the slave axis 340 is the same as that of the big end 332 from the primary axis 331. The slave crank and link 342 thus aid in maintaining the connecting means in a fixed orientation as the primary crank 330 rotates. It will be appreciated that this stabilisation technique may be used with any of the embodiments described herein.

Figure 26 shows an axial cross-section through a big end 350 and a connecting means 352. The connecting means 352 has engagement means 354 which is engaged by the first guide means 356 and 358 of two separate pistons (not shown).

Figure 27 shows a similar structure to that of Figure 26 but with a different configuration of the engagement means 360 on the connecting means 362 and the corresponding first guide means 364, 366 of the two pistons.

Figure 28 shows a connecting means 370 having two slots 372, 374 in each of which is engaged a T-shaped first guide means 376, 378. The first guidemeans 376, 378 may be attached to a single piston or to separate pistons.

Figure 29 shows a connecting means 380 having two slots 382, 384. Each slot has a Z-shape which traps the corresponding first guide means 386, 388.

Figure 30 shows a connecting means 390 having two slots 392, 394 in which are received first guide means 396, 398. Located in the slots are roller bearings 400 to aid movement of the first guide means 396, 398 along the slots 392, 394. It will be appreciated that the bearings 400 will be provided at intervals along the slots.

Figure 31 shows a connecting means 410 in which the first guide means 412, 414 surround the connecting means 410 and engage in downwardly opening slots 416, 418.

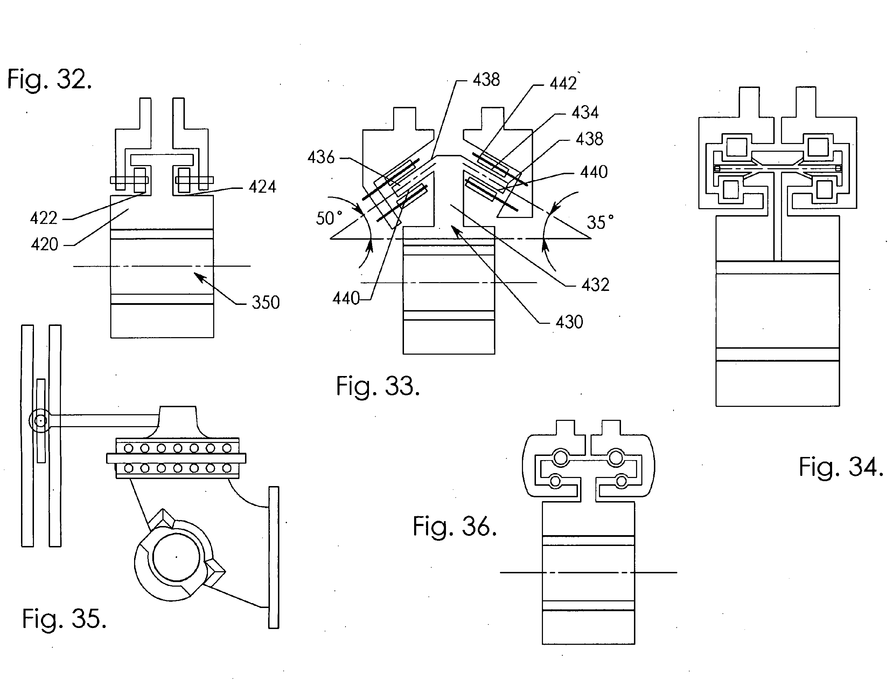

Figure 32 shows a connecting means 420 having two sideways opening slots 422, 424.

Figure 33 shows a connecting means 430 having a T-shaped engagement means 432 having arms 434 and 436 which descend divergently. The upper and lower surfaces 438 and 440 maybe parallel, as in arm 434 or divergent as in arm 436. The piston has a series of opposed roller bearings 442 which engage the upper and lower surfaces and provide the first guide means. As examples the centre line of the arms maybe at between 35° and 50° to the big end bearing pin axis.

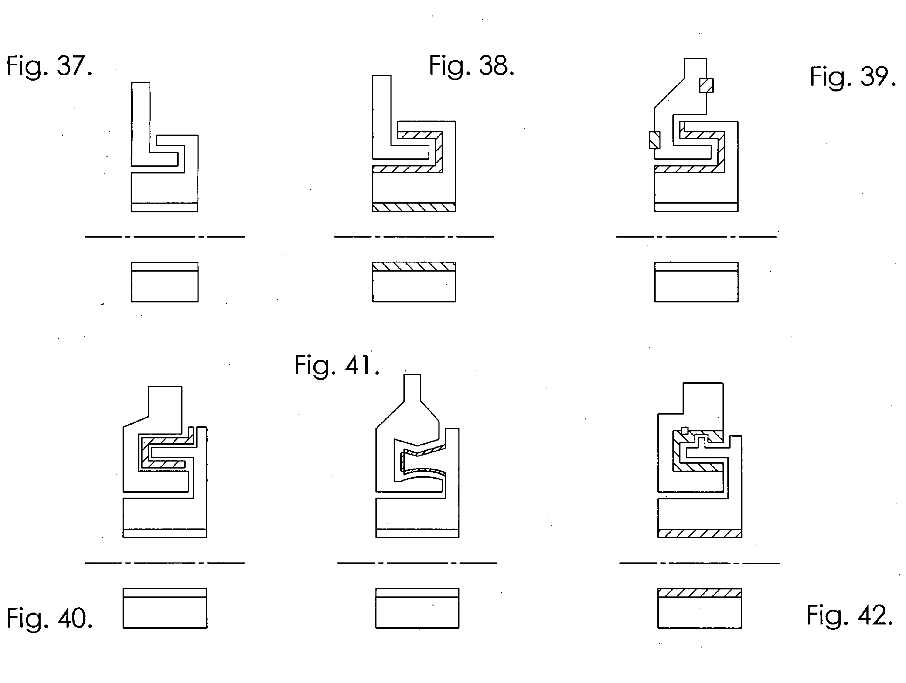

Figure 34 to 42 show further variations possible for the connection between the connection means and the first guide means of the piston or pistons mounted thereon.

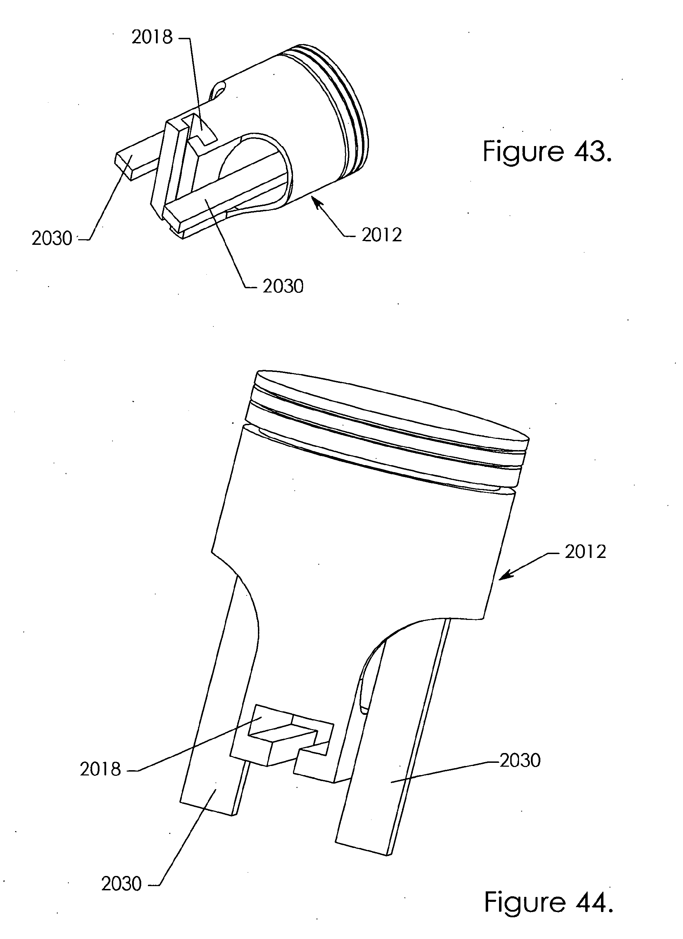

Referring to Figures 43 to 46 there is shown a V-twin scotch yoke engine or pump 2010 according to the invention. The engine or pump has two pistons 2012 reciprocating in cylinders 2014 at 90° to each other, although other angles are possible. A connecting means 2016 is rotatably mounted on a big end bearing pin of a crankshaft (not shown) and slidably engages the two pistons 2012.

Each of the pistons 2012 has a first guide means in the form of a T-shaped slot 2018 which extends diametrically across each piston. The connecting means has corresponding T-shaped tongues 2020 which engage in the slots 2018. Each of the tongues 2020 has a two part construction - the cross arms are formed of a planar web 2024 which is attached to the vertical web 2026 by bolts 2028.

Located on either side of the slot 2018 are two axially extending planar webs 2030 which provide the second guide means. These webs 2030 are diametrically opposite each other and extend perpendicularly to the slot 2018 but do not extend out of the bore of the piston. The webs 2030 are integral with the piston body.

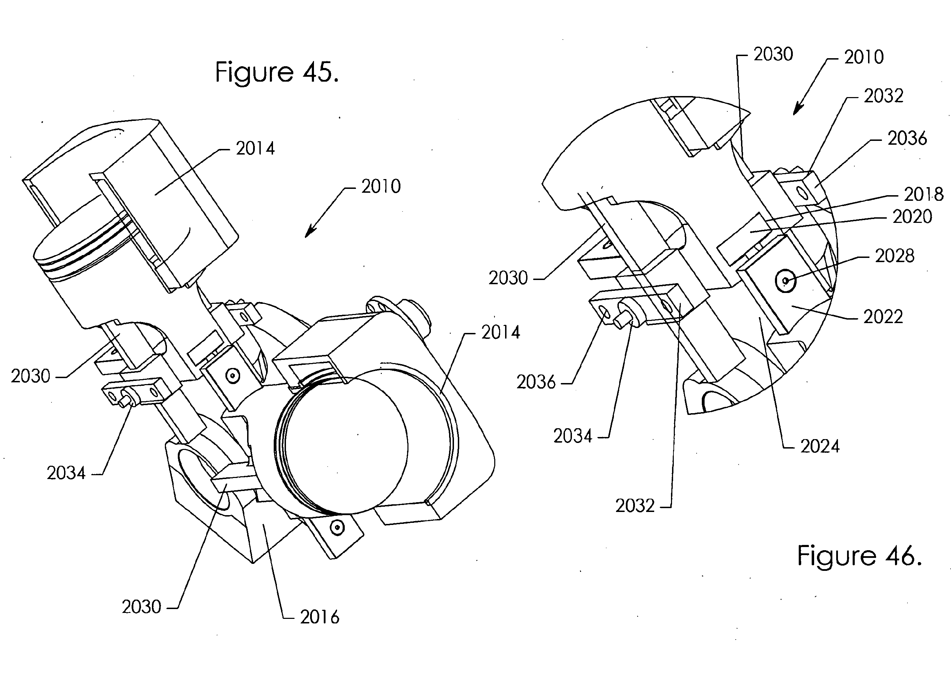

The engine or pump has a series of U-shaped guides 2032 which engage the webs 2030 as seen in Figures 45 and 46, and provide the third guide means. The guides 2032 are rigidly mounted on the crankcase (not shown) and so aid in limiting any wobbling of the pistons as they move within the respective cylinders.

The guides 2032 are preferably located on the crankcase by way of a locating pin 2034 and then bolted via bolt holes 2036.

The guides 2032 serve to limit movement of the pistons both parallel and transverse to the slot 2018 and so enable the skirt length of the piston to be reduced, if desired.

Because the webs 2030 are located to the side of the slot, rather than at one of its ends, the size of the crankcase need not be any greater than a conventional crankcase. Further, because the webs 2030 do not extend out of the bore of the piston, an existing crank-case can be relatively easily modified to take the crankshaft and piston assembly.

The webs and the slot 2018 may be formed integral with the piston and so be formed of the piston material. Alternatively separate components may be provided and the piston assembly built up from those components. Preferably the bearing surfaces of the slot 2018 and the webs 2030 are suitably treated to provide a hard wearing surface or are provided with separate inserts to provide a suitable surface. It is to be understood that oil lubrication will be provided to the bearing surfaces via oil galleries or by oil splashing.

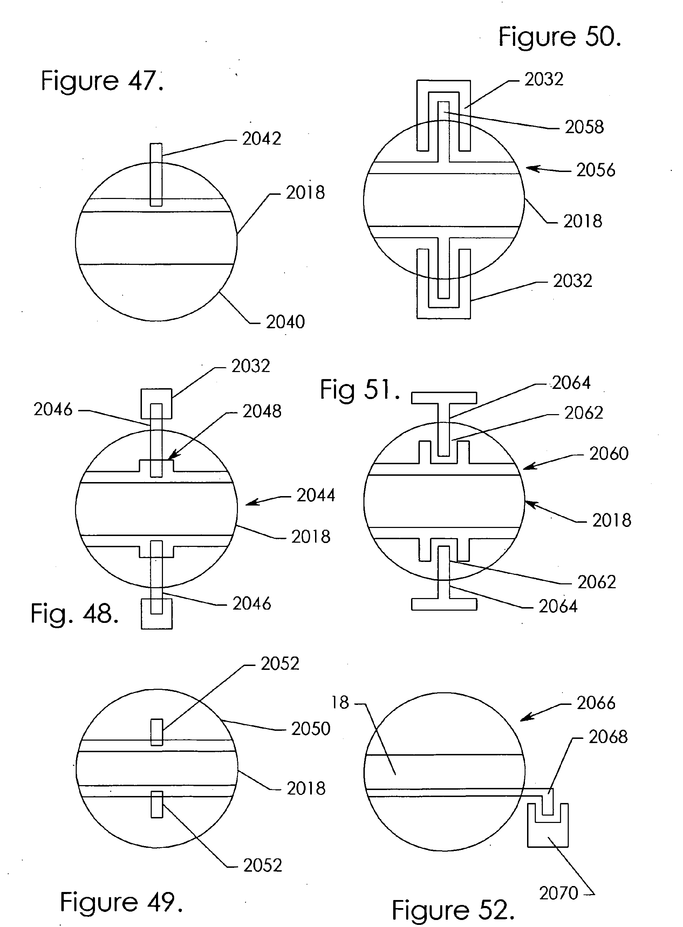

Figures 47 to 88 show bottom plan views of different configurations of piston webs or second guide means which may be used with the connecting means shown in Figures 45 and 46 The third guide means corresponding to the second guide means provided by the vertical webs of each piston are not shown but it will be apparent that the third guide means need to have a shape corresponding to the surface of the webs.

Figure 47 shows a piston 2040 having a single axial web 2042. The web 2042 extends perpendicular to the slot 2018 along a radial line. The web 2042 also extends beyond the piston's circumference and the piston will accord with a piston of the present invention only if the third guide means is engaged wholly within the piston circumfence. The web 2042 may be integral with the piston or a separate component.

Figure 48 shows a piston 2044 having two parallel webs 2046 extending perpendicular to the slot 2018 along a diametrical line. The webs 2046 extend beyond the piston bore to engage guides 2032 outside the piston bore, so that the piston is not in accordance with the present invention. Each web is a separate component and engages in an axially extending slot 2048 on the piston.

Figure 49 shows a piston 2050 having two separate as opposed to integral webs 2052 which engage in slots in the piston. Otherwise, this structure is similar to that of the Figures 43 and 44 pistons.

Figure 50 shows a piston 2056 with a similar construction to that of the Figures 43 and 44 piston except that webs 2058 extend beyond the bore of the piston and engage the guides 2032 outside the piston bore, so that this piston is not in accordance with the present invention.

Figure 51 shows a piston 2060 having two axially extending slots 2062 which engage axially extending webs 2064 mounted on the crankcase.

Figure 52 shows a piston 2066 having an axially extending web 2068 which is located at one end of the slot 2018 and is engaged by a U-shaped guide 2070.

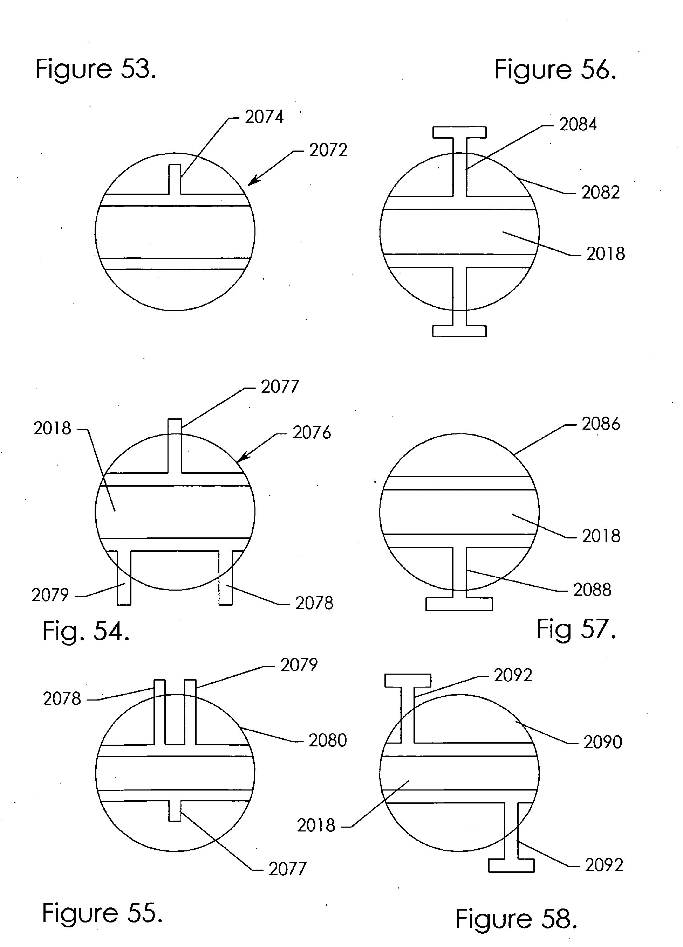

Figure 53 shows a piston 2072 having a single integral web 2074.

Figure 54 shows a piston 2076 having three webs 2077, 2078 and 2079. One web 2077 extends perpendicular to the slot 2018 from the centre of the piston 2076 whilst the other two webs 2078 and 2079 extend perpendicular to the slot from its other side. The webs 2078 and 2079 are spaced apart and located towards the ends of the slot 2018. All three webs extend beyond the piston's circumference and the piston will accord with a piston of the present invention only if the third guide means is engaged wholly within the piston circumfence.

Figure 55 shows a piston 2080 similar to that of Figure 54 except that the two webs 2078 and 2079 are much closer together and located toward the centre of the slot 2018. In addition the single web 2077 remains within the piston's circumference.

Figure 56 shows a piston 2082 having two T-shaped members 2084 extending diametrically opposite to each other perpendicular to the slot 2018.

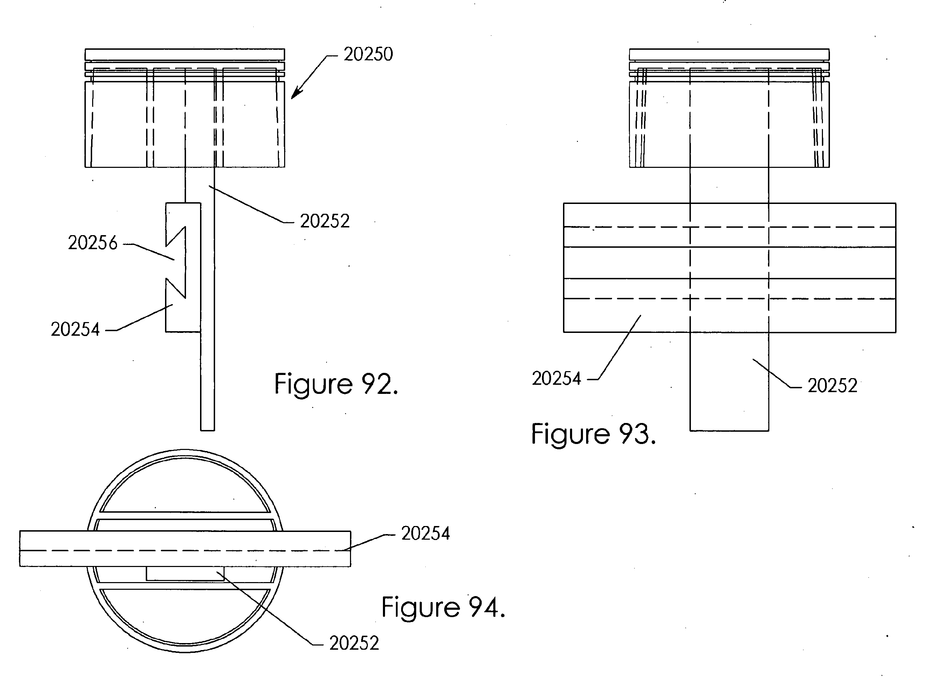

Figure 57 shows a piston 2086 similar to that of Figures 94 but having a single T- shaped member 88 extending from the centre of the piston.

Figure 58 shows a piston 2090 having two T-shaped members 2092 which are offset from the centre of the piston. The offset is symmetrical about the piston's centre, but need not be.

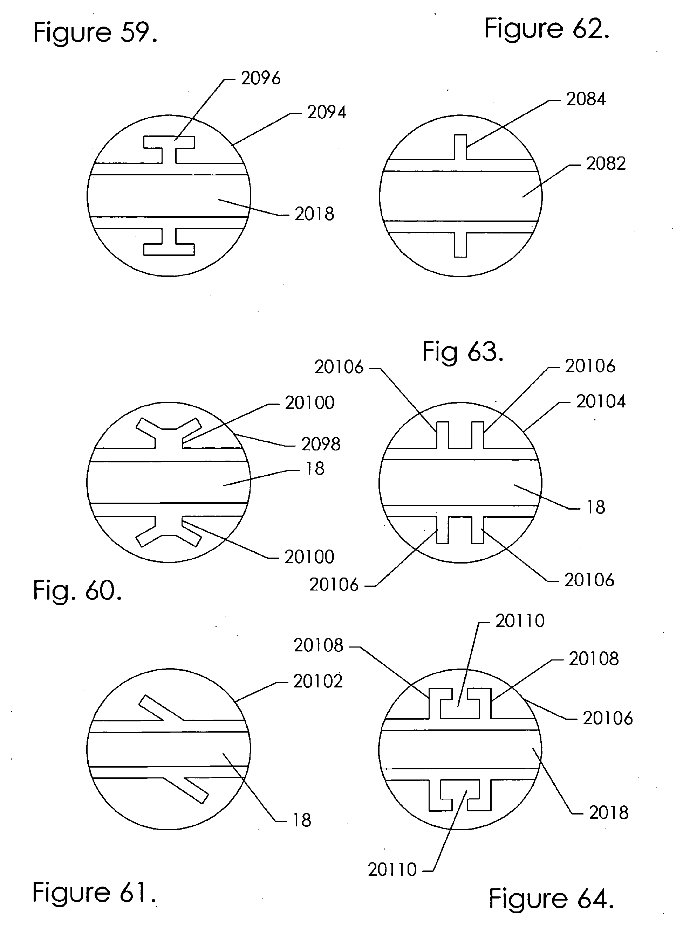

Figure 59 shows a piston 2094 similar to that of Figure 56 except that the T- shaped members 2096 remain within the bore of the piston.

Figure 60 shows a piston 2098 having Y-shaped axially extending webs 20100 which extend from the centre of the slot 2018.

Figure 61 shows a piston 20102 having two planar webs 20104 extending from the centre of the slot 2018 but about 45° rather than 90°.

Figure 62 shows a piston 2082 having two webs 2084, the piston being similar to the piston 2012 of Figs. 43-46.

Figure 63 shows a piston 20104 having four webs 20106 extending perpendicular to the slot 2018. Each web is engaged by a respective third guide means (not shown).

Figure 64 shows a piston 106 in which two pairs of L-shaped members 20108 define two axially extending T-shaped slots 20110 into which a T-shaped third guide means (not shown) engages.

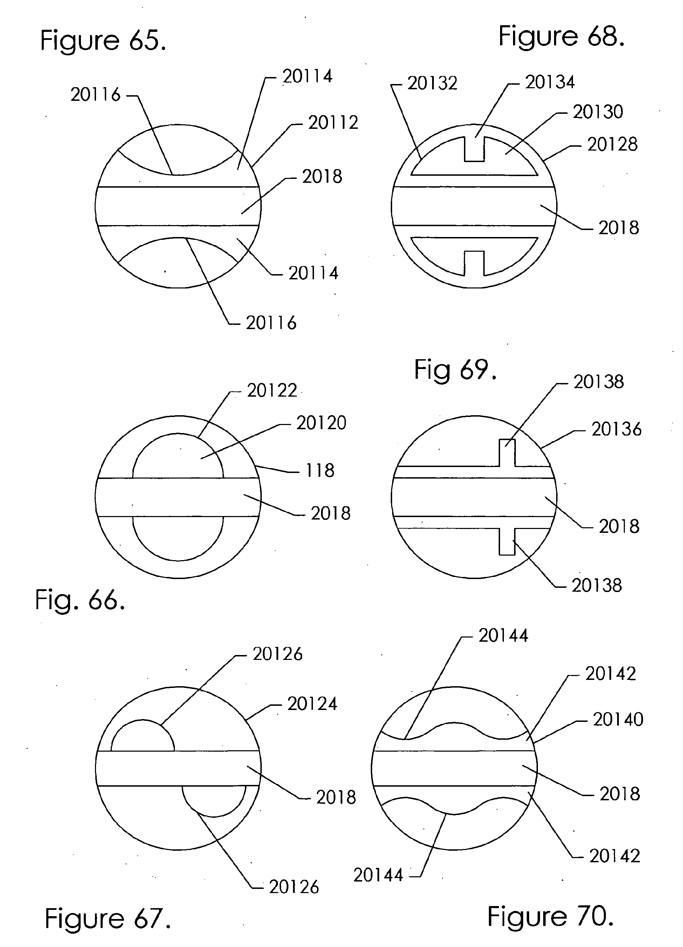

Figure 65 shows a piston 20112 having two webs 20114, each of which has a concave surface 20116 for engaging a complementary third guide means. The surfaces 20116 may be elliptical, circular or any other shape.

Figure 66 shows a piston 20118 having two webs 20120 with convex surfaces 20122. These surfaces 20122 may be elliptical, circular or any other shape.

Figure 67 shows a piston 20124 with two webs 20126 similar to those of the Figure 66 device but in which the webs 20126 are offset in opposite directions from the centre of the slot 2018. The offset may be symmetrical or asymmetrical.

Figure 68 shows a piston 20128 with two webs 20130 having convex surface 20132. A slot 20134 extends inwardly from the convex surface 20132 towards the centre of the slot 2018.

Figure 69 shows a piston 20136 having two webs 20138 extending perpendicular to the slot 2018 but both are offset from the centre of the piston and are opposite each other.

Figure 70 shows a piston 20140 with two axially extending webs 20142. Each web has an undulating surface 20144 which engages a corresponding third guide means (not shown).

These undulating surfaces 20144 may be arcuate, ellipsoidal or any other suitable shape. The shape may be regular or irregular.

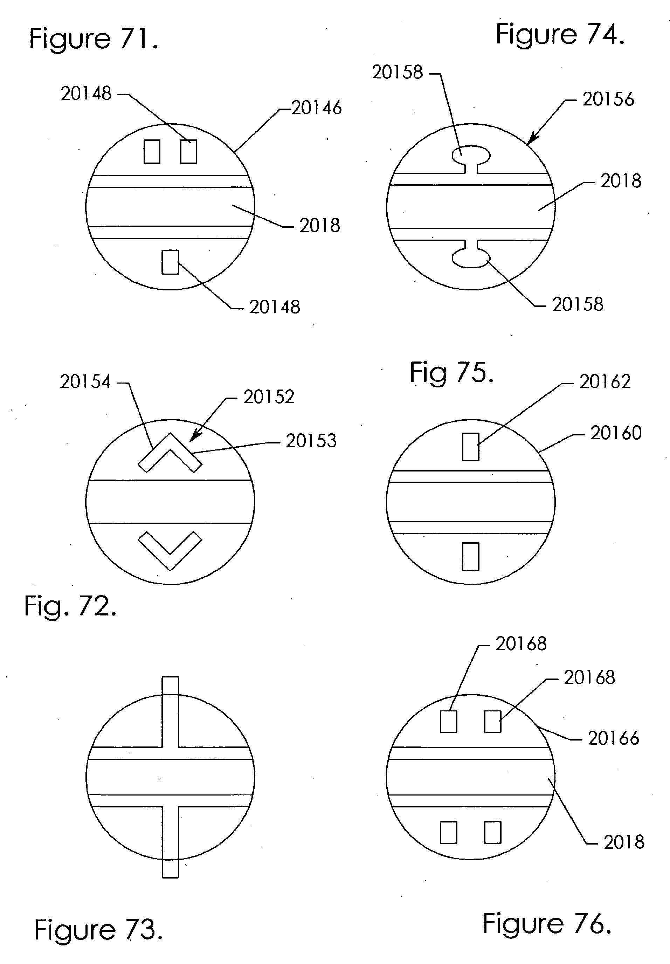

Figure 71 shows a piston 20146 similar to that of Figures 54 and 55 in having rectangular cross section webs, 20148. However the webs 20148 do not engage and are not integral with the housing for the slot 2018. Instead the webs extend from the underside of the piston.

Figure 72 shows a piston 20150 having two webs 20152 extending downwards from the main body of the piston separately from the housing for the slot 2018. Each web is formed of two arms 20153, 20154 which extend at 90° to each other. The arms may extend at other angles.

Figure 73 shows a piston similar to that of Fig.72, but with the webs extending beyond the piston bore. As with all of the piston designs in which the webs extend beyond the piston bore, the piston will accord with a piston of the present invention only if the third guide means is engaged wholly within the piston bore or circumfence.

Figure 74 shows a piston 20156 with two axially extending members 20158. The members 20158 have, in cross section, a mushroom shape.

Figure 75 shows a piston 20160 with two axially extending members 20162 which do not engage the housing for the slot 2018.

Figure 76 shows a piston 20166 similar to that of Figure 75 but with four axially extending members 20168. Two of the members 20168 are located on either side of the slot 2018. The arrangement of the four members is preferably symmetrical about the centre of the piston.

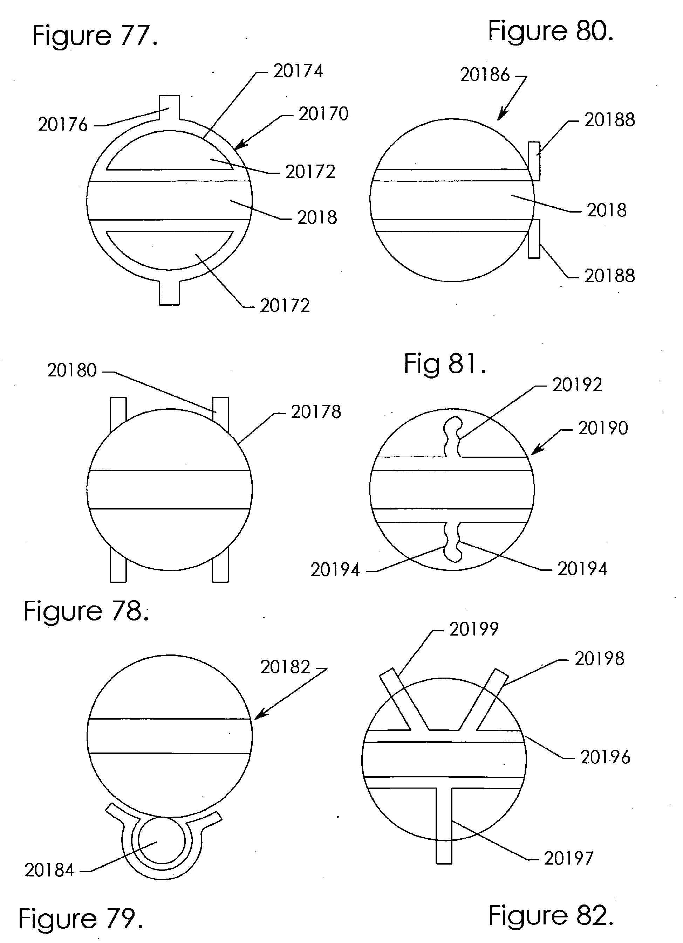

Figure 77 shows a piston 20170 with two pairs of guide members. A first pair 20172 extends from the underside of the main body of the piston and has a circular or elliptical outer surface 20174. The other pair 20176 extend from the circular peripheral surface of the piston.

Figure 78 shows a piston 20178 having four axial guide members 20180 extending from the circular peripheral surface of the piston.

Figure 79 shows a piston 20182 having a substantially rod shaped guide member 20184 extending axially. The guide member 20184 is integral with or mounted to the peripheral surface of the piston.

Figure 80 shows a piston 20186 similar to that of Figure 52 except that two guide members 20188 are provided at one end of the slot 2018.

Figure 81 shows a piston 20190 with two guide members 20192 extending axially and generally radially from the housing to the slot 2018. Each member 20192 has undulating side surfaces 20194. These may have any shape desired.

Figure 82 shows a piston 20196 with three guide members 20197, 20198 and 20199. The guide member 20197 extends perpendicularly to the slot 2018 whilst members 20198 and 20199 extend divergently to each other from the slot 2018. Preferably all three members extend radially from the slot 2018.

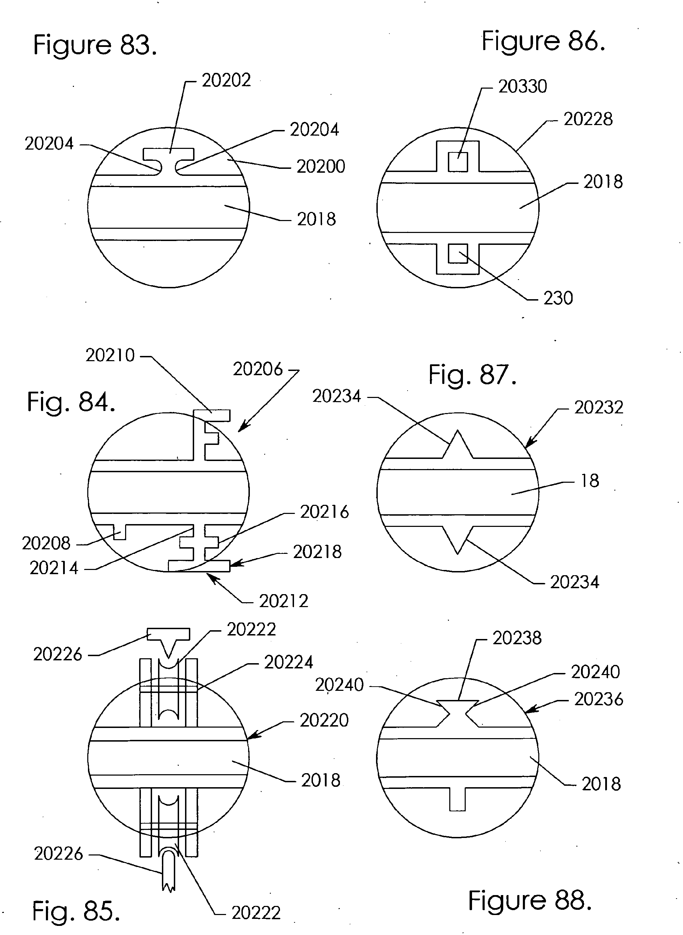

Figure 83 shows a piston 20200 having a single guide member 20202 extending axially. The guide member 20202 has concave sides 20204 and planar outer surface 20206. Preferably surface 20206 is parallel to the slot 2018.

Figure 84 shows a piston 20206 having three axially extending guide means 20208, 20210 and 20212. Guide member 20208 is a simple rectangle in cross section, guide member 20210 is F-shaped in cross section whilst guide member 20212 has a central spine with arms 20216 and 20218 extending from its side. The arms 20216 and 20218 may have the same or different lengths.

Figure 85 shows a piston 20220 having at least one roller 20222 mounted on each side of the slot 2018 by axle pins 20224. The rollers 20224 engage an axially extending guide 20226 mounted on the crankcase. The piston may be provided with two or more rollers on either side of the slot 20118.

Figure 86 shows a piston 20228 having two rectangular section tubes 20230 extending axially on either side of the slot 2018. These tubes 20230 are open at least one end and receive axially extending guide rods mounted on the crankcase.

Figure 87 shows a piston 20232 having triangular shaped guide members 20234 extending axially on either side of the slot (2018.

Figure 88 shows a piston 20236 having a guide member 20238 with triangular indents 20240 in its two sidewalls.

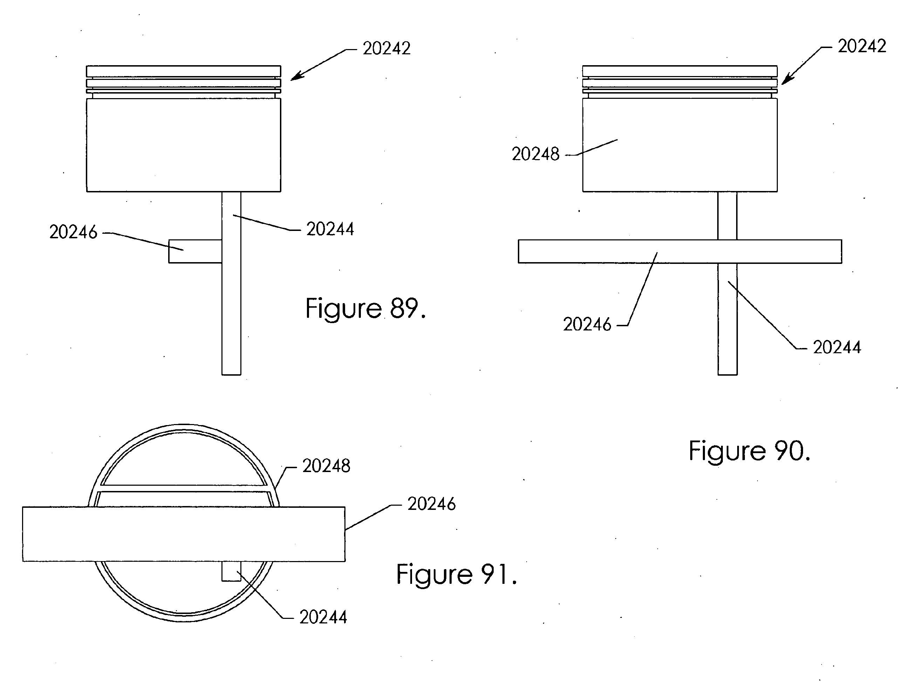

Figures 89 to 91 show a piston 20242 with a vertically extending guide bar 20244 and a horizontal slide bar 20246. The bar 20244 extends from the lower surface of the main body 20248 of the piston. The horizontal bar 20246 is mounted on an inner side of the vertical bar 20244. The bar 20246 is engaged by a suitable engagement means on the connecting means whilst the vertical bar 20244 provides the second guide means which is engaged by a suitable third guide means mounted on the crankcase.

Figures 92 to 94 show a piston 20250 with a vertical guide bar 20252 and a horizontal bar 20254. The horizontal bar 20254 has a re-entrant slot 20256 for slideably engaging a corresponding tongue on a connecting means.

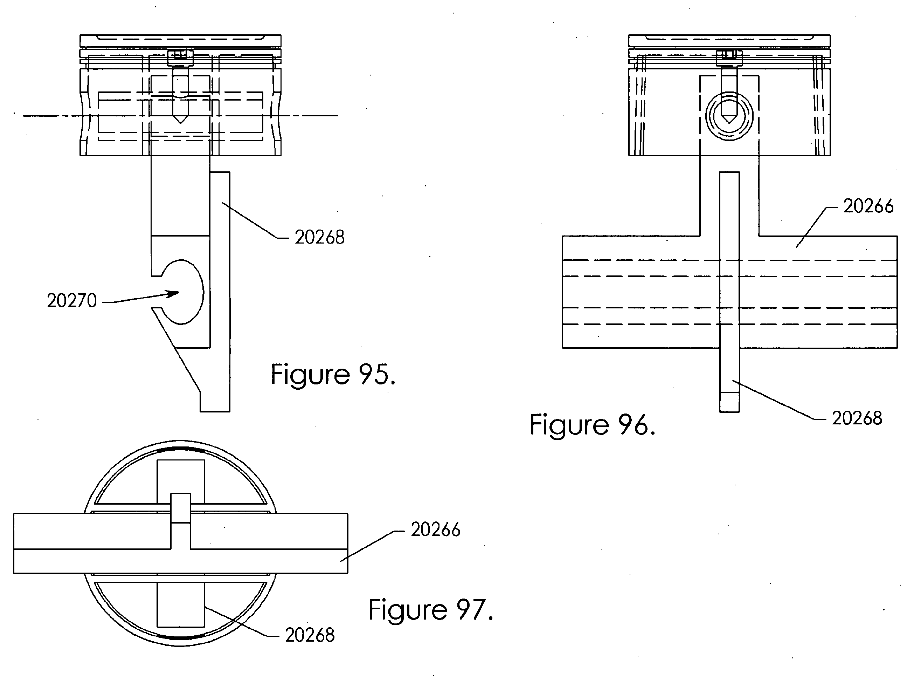

Figures 95 to 97 show a piston having a main body. Rotatably mounted to the main body by a gudgeon pin is an engagement/guide means. This engagement/guide means includes a horizontally extending portion 20266 and a vertical extending portion 20268. The horizontal portion includes a slot 20270 which provides the first guide means and slideably receives a complimentary tongue on the connecting means (not shown) whilst the vertical portion provides the second guide means and is engaged by a third guide means mounted on the crankcase. It will be noted that the vertically extending portion extends above and below the horizontally extending portion.

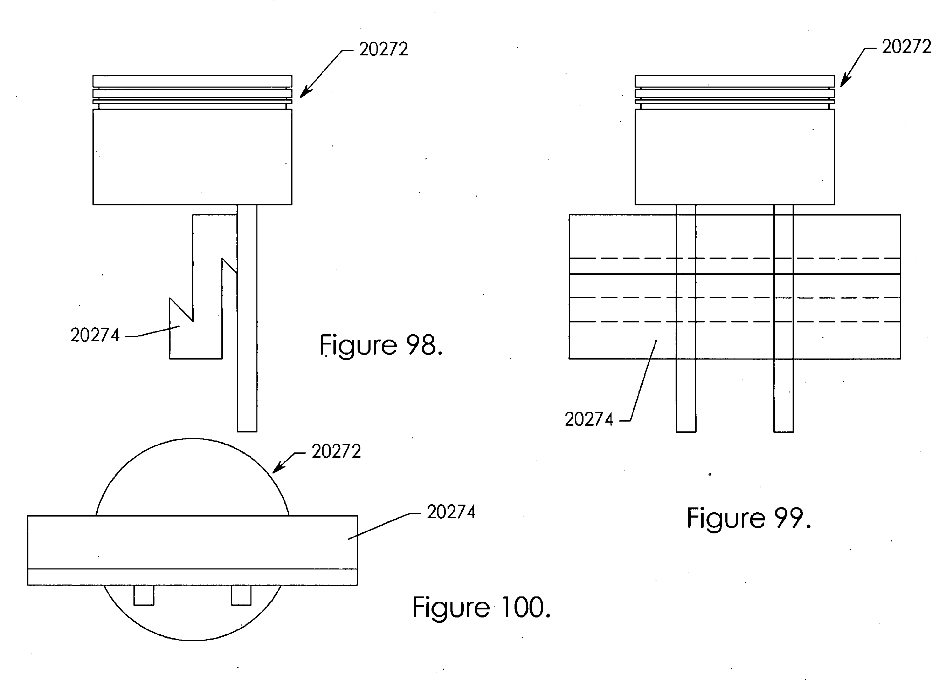

Figures 98 to 100 show a piston assembly 20272 with a Z-shaped horizontally extending member which slideably engages a complimentary surface on the connecting means.

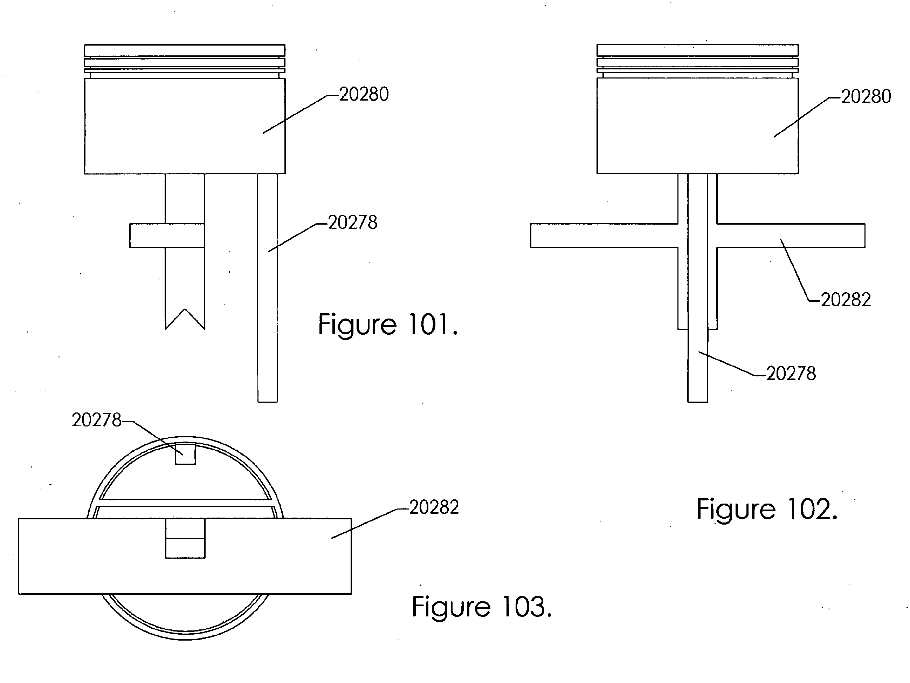

Figures 101 to 103 show a piston assembly 20276 in which a vertical guide bar 20278 providing the second guide means extends from the base of the main body of the piston 20280. A horizontal bar 20282 providing the first guide means is mounted on the main body 20280 independently of the guide bar 20278.

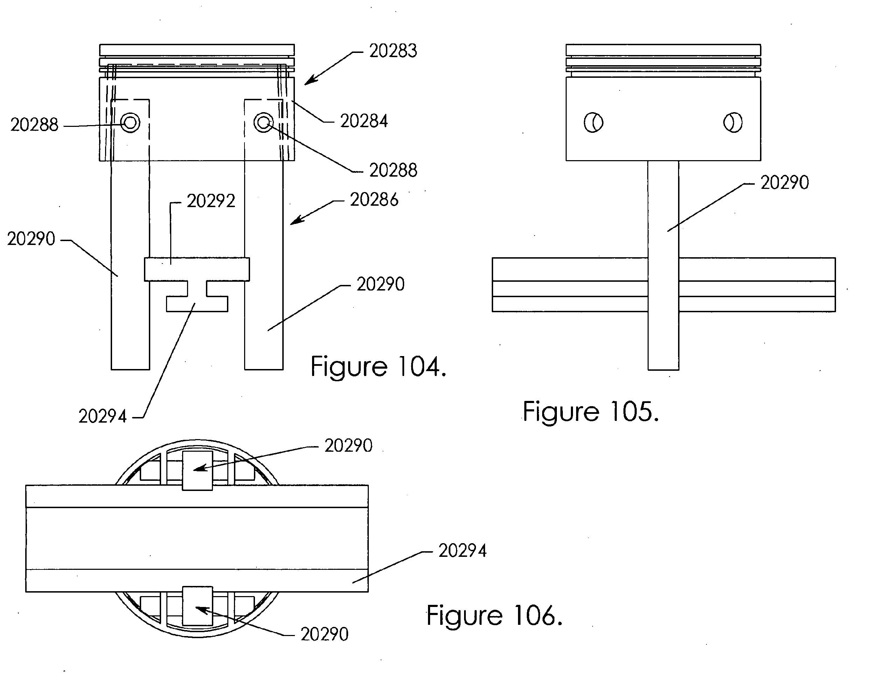

Figures 104 to 106 show a piston assembly 20282 having a main body 20284 and an engagement/guide assembly 20286 mounted to the main body by pins or bolts 20288. The engagement/guide assembly has two vertical legs 20290 and a cross-bar 20292. Mounted on the cross bar is a horizontally extending T-shaped engagement member 20294 which extends perpendicular to the plane of the two vertical guide bars 20290. This member 20294 is the first guide means which is engaged by the connecting means.

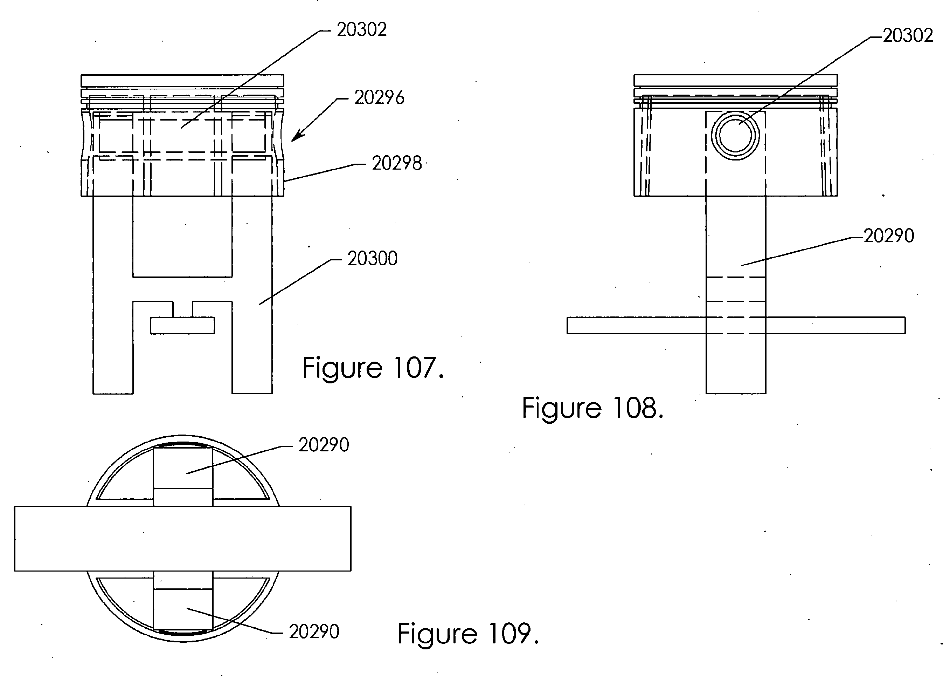

Figures 107 to 109 show an assembly 20296 similar to that of Figures 104 to 106 and a similar engagement/ guide assembly 20300 is mounted to the main body 20298 of the piston. The assembly 20300 is mounted to the main body 20298 by a gudgeon pin 20302 which extends in the plane of the two legs 20290. The assembly 20300 may pivot about the pins 20302.

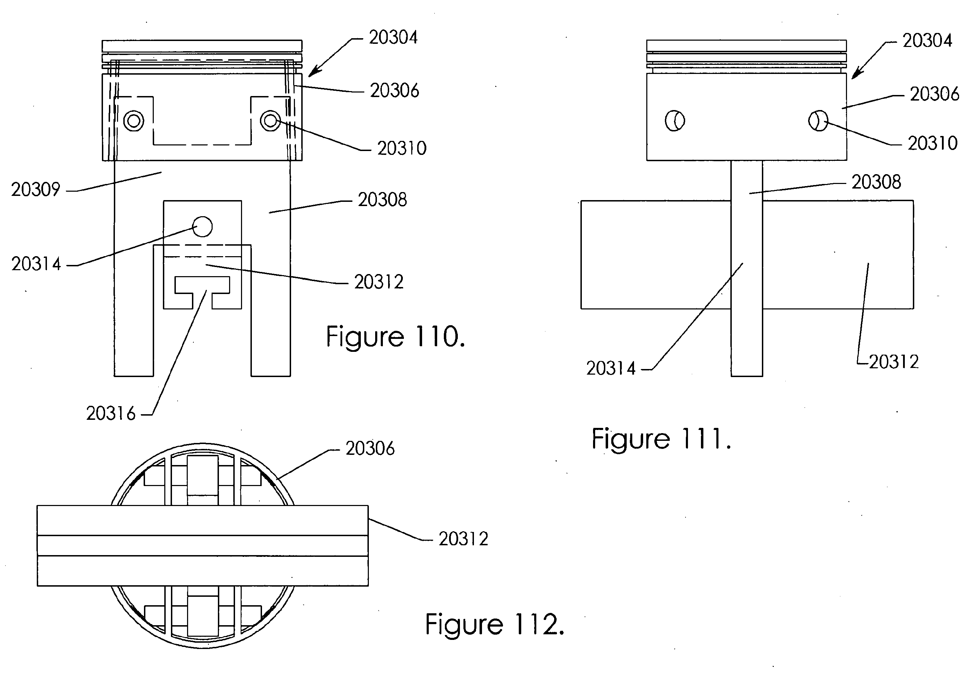

Figures 110 to 112 show a piston assembly 20304 having a main body 20306 on which is mounted an H-shaped guide assembly 20308. The assembly is mounted to the main body 20306 via pins 20310. Mounted on the cross-bar 20309 of the assembly 20308 is a horizontally extending engagement bar 20312. The bar 20312 is pivotably mounted to bar 20309 via pin 20314. The bar 20312 has a T-shaped slot 20316 for engaging a T-shaped tongue on the engagement means.

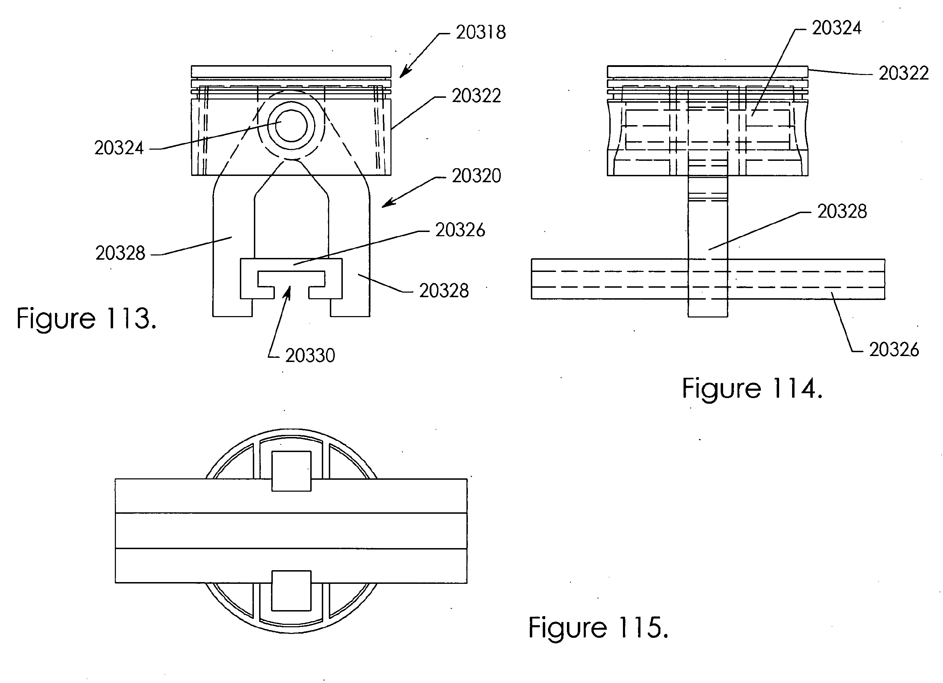

Figures 113 to 115 show a piston assembly 20318 having a guide/engagement means 20320 mounted to the main body 20322 via pin 20324. A cross bar 20326 extends between vertical members 20328 and includes a T-shaped slot 20330.

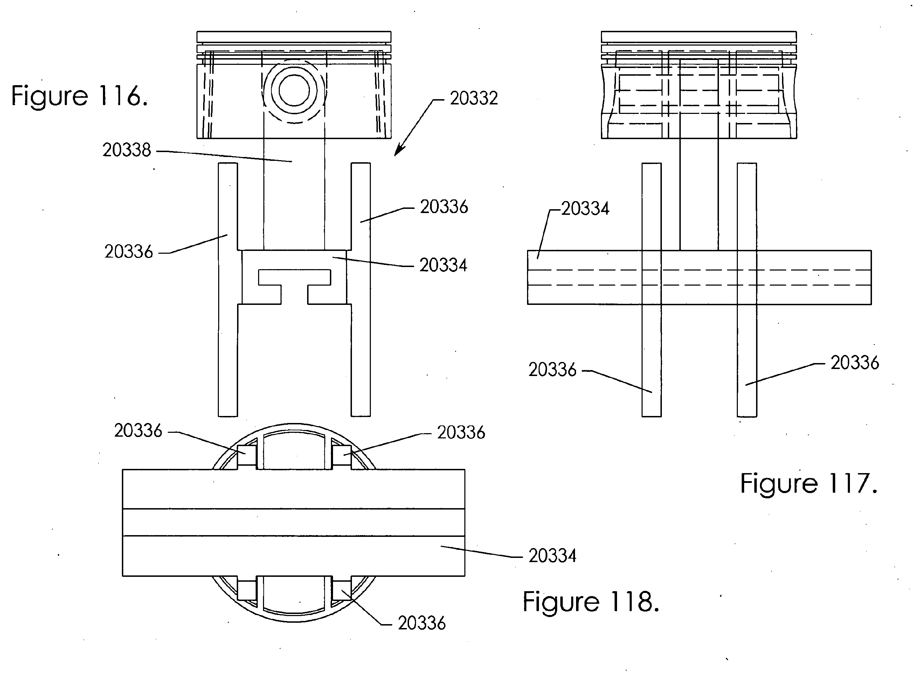

Figures 116 to 118 show a guide/engagement assembly 20332 having a cross-bar 20334, four vertical guide bars 20336 and a central connecting bar 20338. There are two vertical guide bars 20336 on either side of the cross bar 20334. The cross bar has a T-shaped slot.

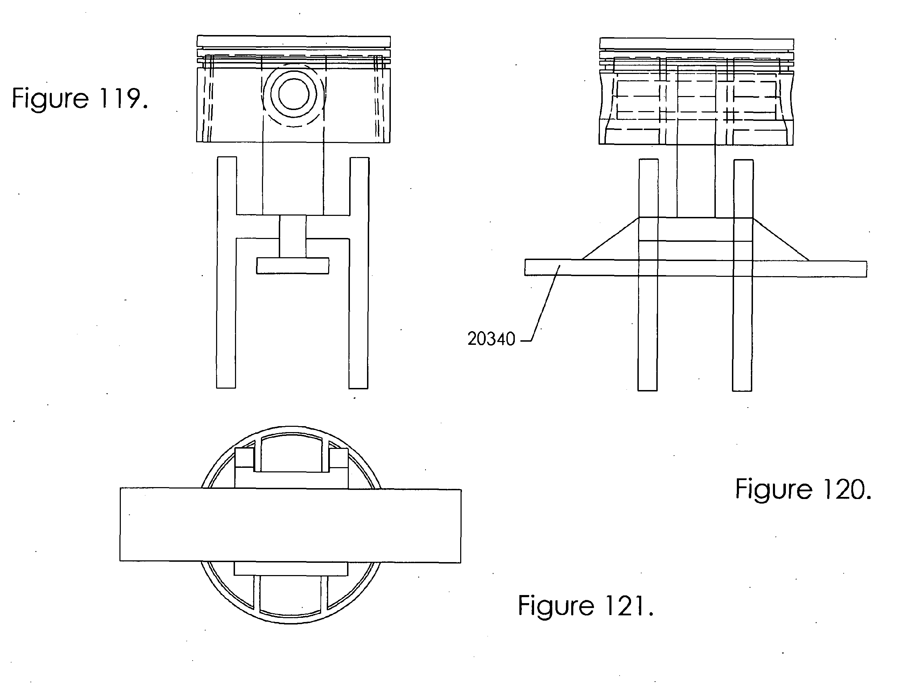

Figures 119 to 121 show an assembly similar to that of Figures 116 to 118 except that the cross bar 20340 is T-shaped, rather than having a T-shaped slot.

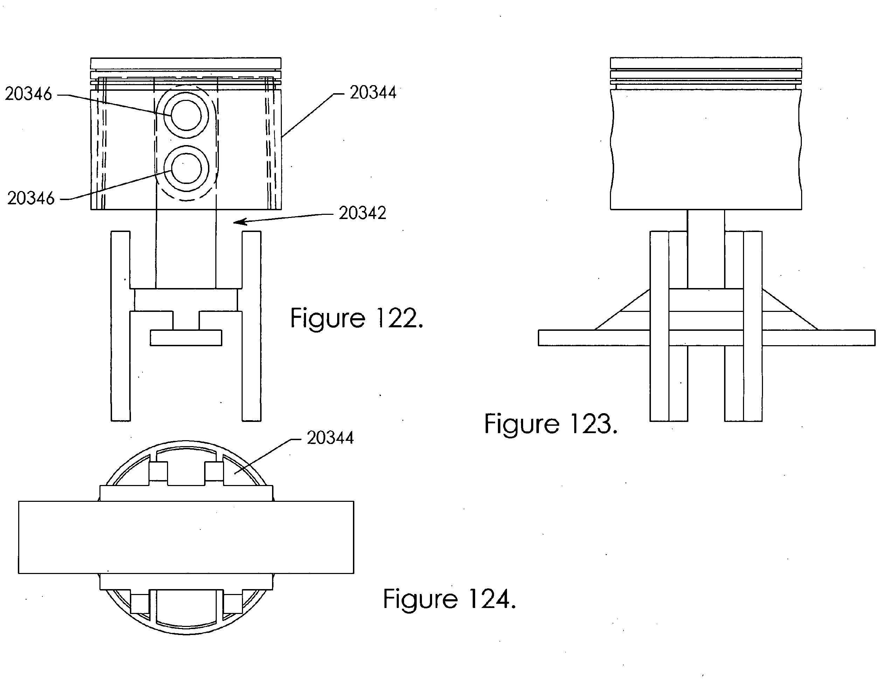

Figures 122 to 124 show an assembly 20342 similar to that of Figures 1119 to 121 attached to a piston body 20344 by two pins 20346 so that pivoting is not possible.

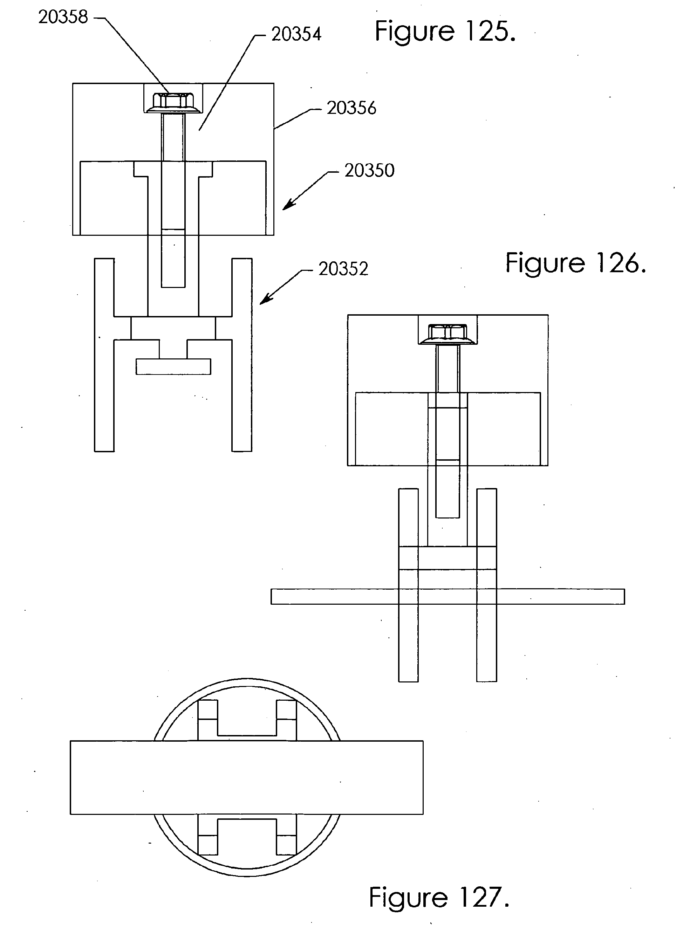

Figures 125 to 127 show a piston assembly 20350 having a guide/engagement means 20352 mounted on a pin or cross-bar 20354 of the piston body 20356. The pin or cross-bar 20354 may be separate from or integral with the body 20356. The assembly is retained on the cross-bar 20354 by bolt 20358.

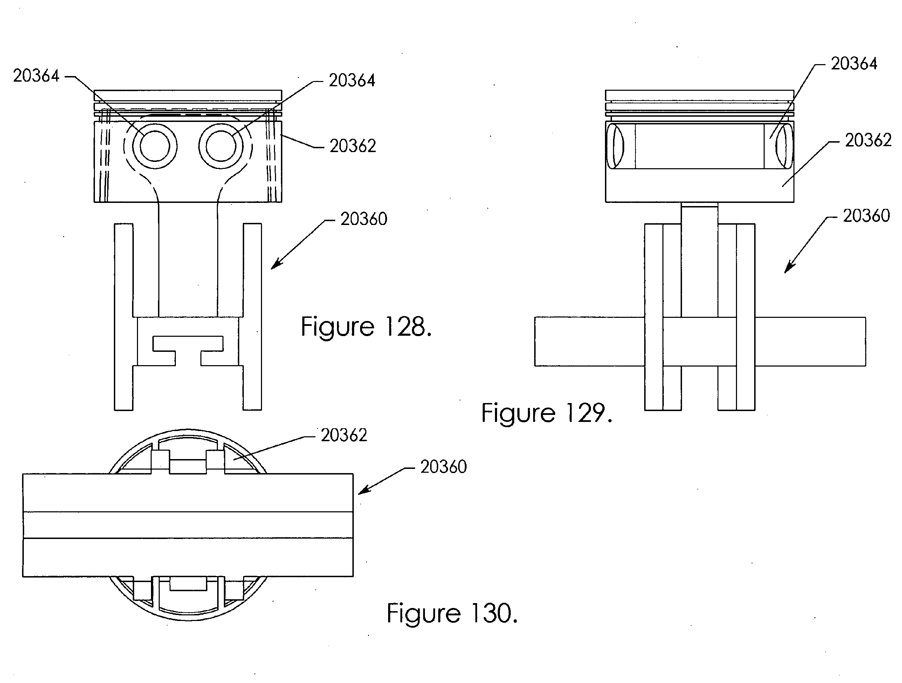

Figures 128 to 130 show a guide/engagement assembly 20360 similar to that of Figures 116-118 but retained on the piston body 20362 by two pins 20364.

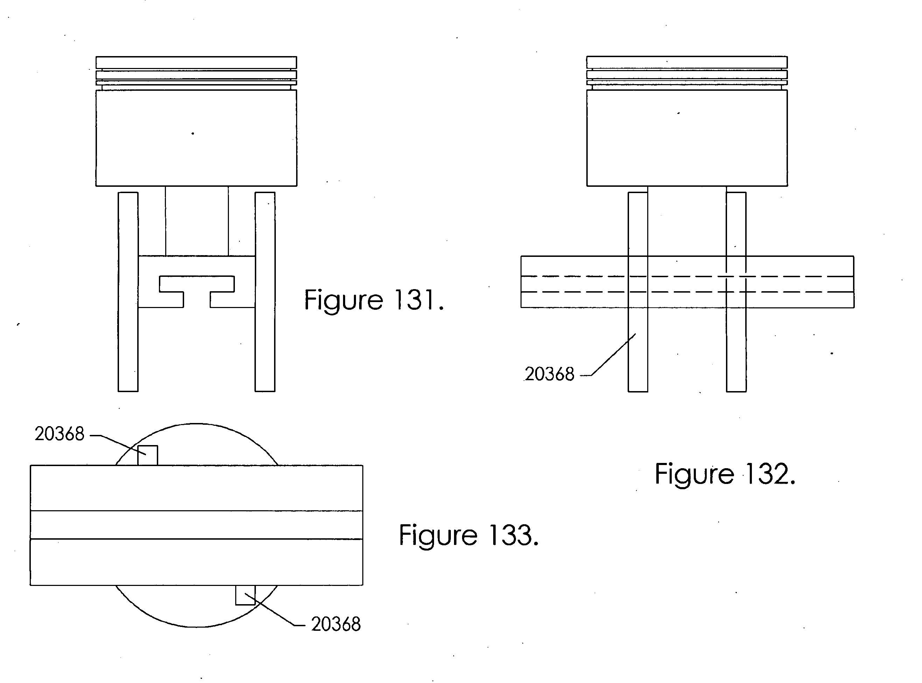

Figures 131 to 133 show a piston assembly functionally identical to that of Figures 128 to 130 but in which there is a single unitary structure and only one vertical guide bar 20368 on each side of the horizontal engagement bar as opposed to two.

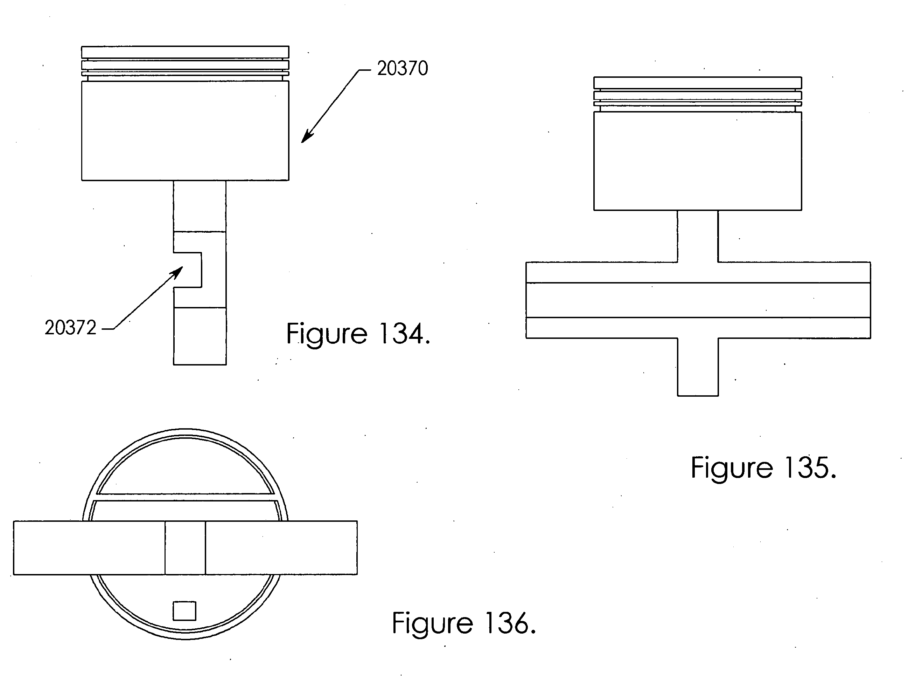

Figures 134 to 136 show a piston assembly 20370 similar to that of Figures 89 to 91 but in which a horizontal slot 20372 is provided for engagement with the connecting means.

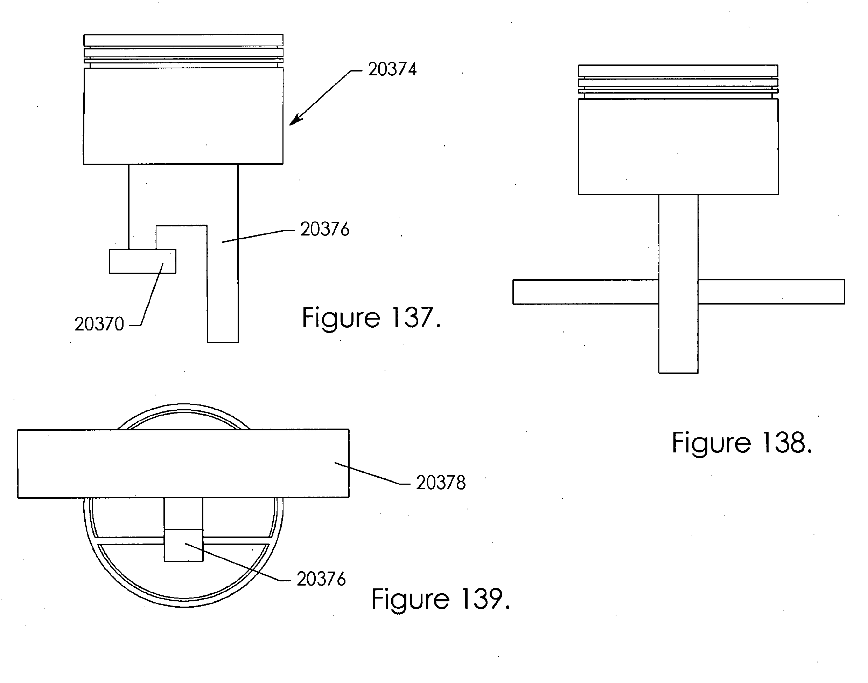

Figures 137 to 139 show a piston assembly 20374 having a single second guide means 20376 and a T-shaped engagement bar 20378 depending from the second guide means 20376.

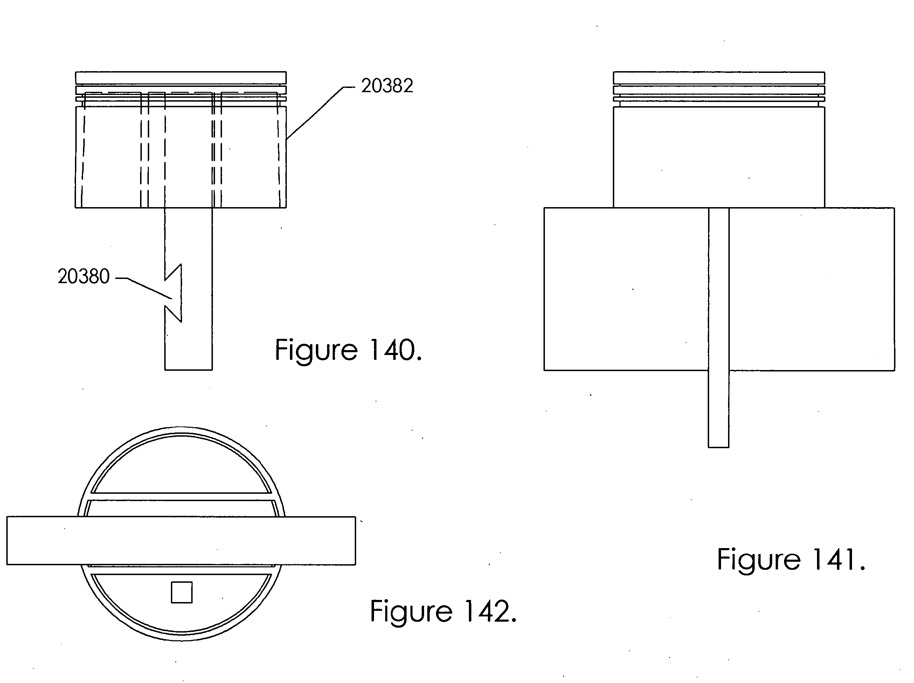

Figures 140 to 142 show a piston assembly functionally identical to the Figures 92 to 94 embodiment except that the re-entrant slot 20380 is much nearer to the piston body 20382.

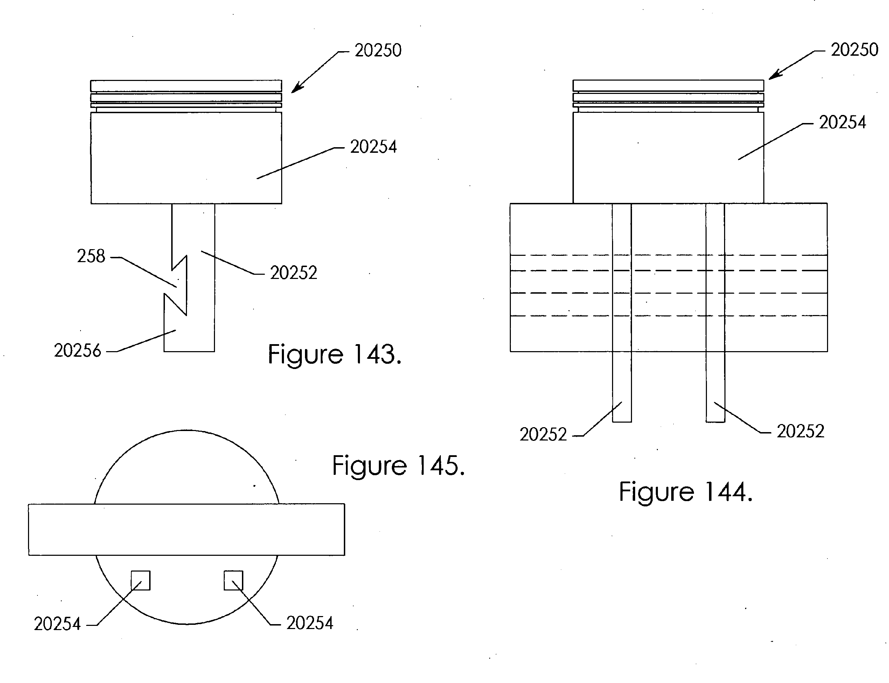

Figures 143 to 145 show a piston assembly 20250 having two second guide means 20252 extending from the piston body 20254. A cross-bar 20256 is mounted inwardly of the bars 20252 and extends horizontally. The cross-bar has a diamond shaped slot 258 which receives a corresponding tongue mounted on the connecting means.

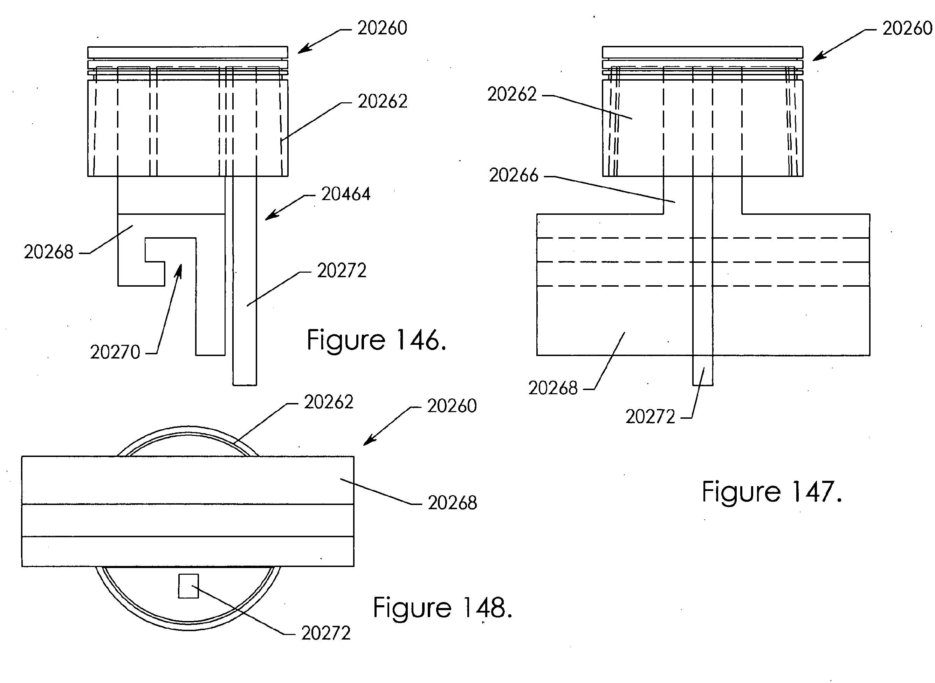

Figures 146 to 148 show a piston assembly 20260 having a piston body 20262 from which descends a guide/engagement assembly 20264. This assembly 20264 includes a T-shaped engagement portion 20266 having a cross-bar 20268 which in turn defines an L-shaped slot 20270 to receive an L-shaped tongue mounted on a connecting means. A vertical guide bar 20272 descends from the piston body 20262. Preferably the guide bar 20272 is integral with the engagement portion 20266 but it may be separate. The guide bar 20272 preferably extends below the horizontal cross bar 20268.

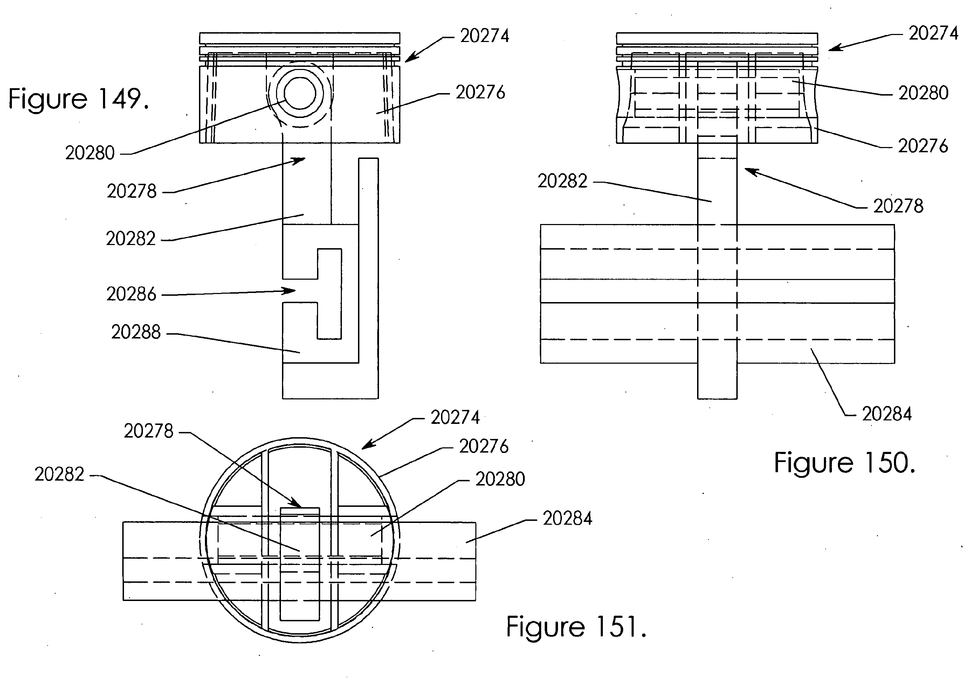

Figures 149 to 151 show a piston assembly 20274 having a piston body 20276 and a guide/engagement assembly 20278 pivotably mounted to the body 20276 by gudgeon pin 20280. The assembly 20278 has a T-shaped portion comprising vertical leg 20282 and horizontal cross-bar 20284. The cross-bar has a T-shaped slot 20286 in a side wall 20288 for receiving a corresponding tongue on the connecting means.

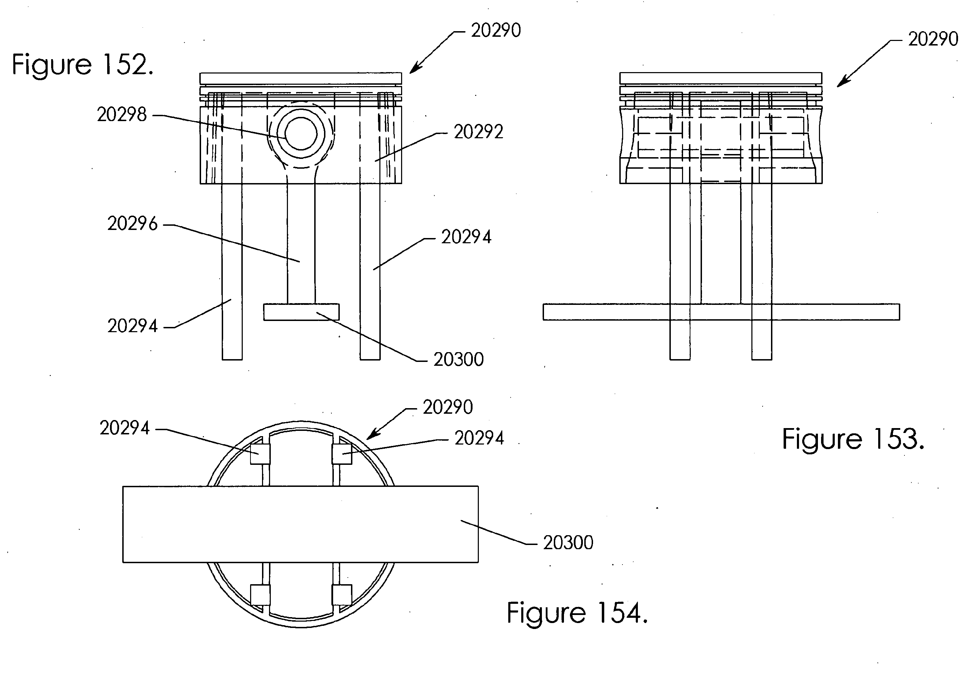

Figures 152 to 154 show a piston assembly 20290 having a piston body 20292 with four vertical and parallel guide bars 20294 extending downwards. The four bars 20294 are located at the corners of a square centred on the centre of the piston's circumference.

An engagement means 20296 is pivotably mounted on the piston via gudgeon pin 20298 and is located between the vertical guide bars 20294. The first guide means includes a flat cross bar 20300 which may engage in a T-shaped slot on the connecting means.

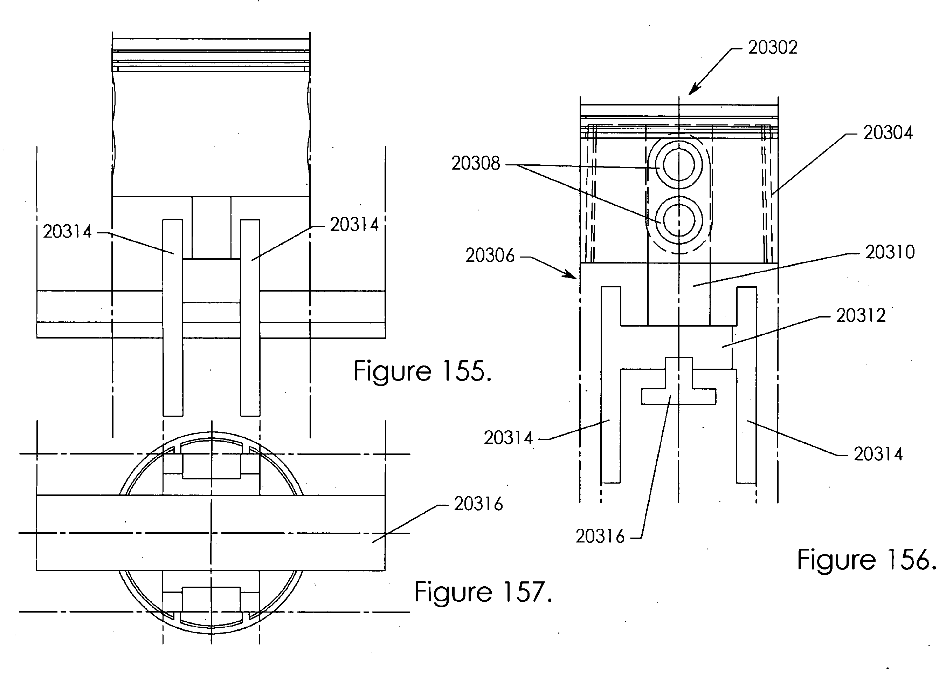

Figures 155 to 157 show a piston assembly 20302 having a piston body 20304 with a guide/engagement assembly 20306 attached to the body 20304 by two pins 20308. The assembly 20306 has a vertical post 20310 and a first cross bar 20312 having four vertical guide posts 20314, each arranged at one of its corners. Mounted to the underside of the first cross bar 20312 is a second T-shaped cross bar 20316 which is engaged by a corresponding T-shaped slot on the connecting means.

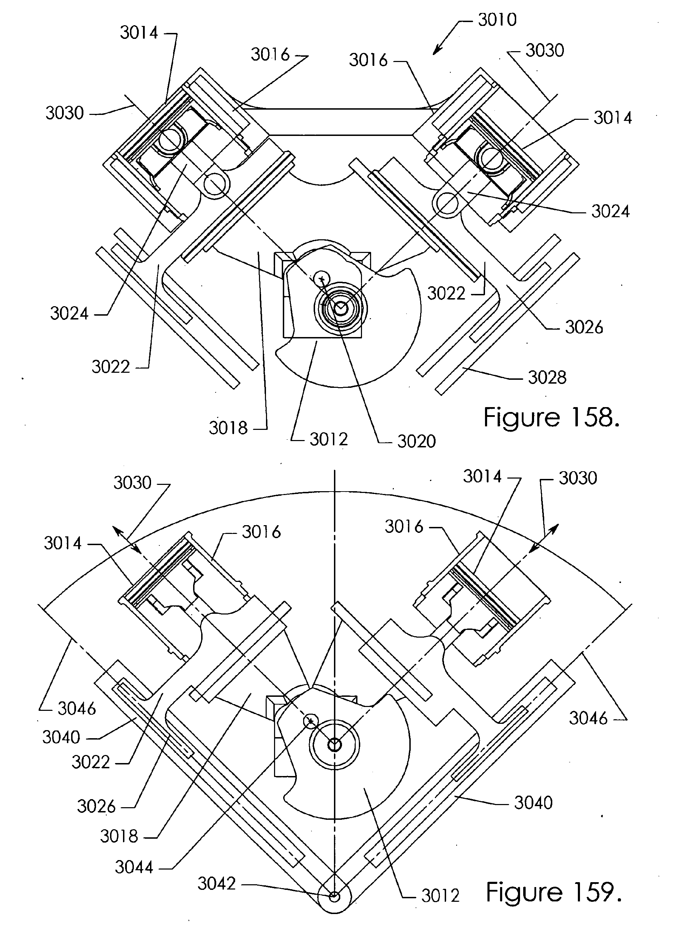

Referring to Figure 158 there is shown a reciprocating piston device 3010 having a crank 3012, pistons 3014 reciprocating in cylinders 3016 and a connecting means 3018 rotatably mounted on the big end bearing pin 3020 of the crankshaft 3012. The connecting means 3018 engages intermediate members 3022. Connecting rods 3024 connect the members 3022 with the respective piston 3014 and the connecting rods 3024 are pivotably attached to the piston 3014 and members 3022.

The intermediate members 3022 have a sliding arm 3026 mounted in a slider channel 3028. The slider channel 3028 defines a linear slot parallel to the respective cylinder axis 3030. The intermediate member is thus constrained to move parallel to the cylinder axis. The connecting means 3018 is limited to motion relative to the members 3022 which is perpendicular to the cylinder axis and so as the crank rotates the pistons are caused to follow a true sinusoidal path.

Figure 159 shows a design similar to that of Figure 158 and accordingly the same numbers are used for like parts. In the Figure 159 design the intermediate members 3022 engage in slider channels 3040 which are pivoted about a common axis 3042. This axis is on a line passing through the crankshaft axis 3044 which bisects the angle between the two cylinder axes 3030. The slider channels 3040 may be rotated about the axis 3042 so that the slider channel axes 3046 are not parallel to the cylinder axes 3030. This causes the intermediate members to travel at an angle to the cylinder axes, so reducing the effective stroke of the device. Sideways motion of the intermediate members 3022 relative to the pistons is accommodated by the pivotable connection of the respective connecting rod 3024 to both the piston and member 3022. The effect is to superimpose a secondary sinusoidal motion due to this sideways motion on the sinusoidal motion caused by the rotation of the crankshaft.

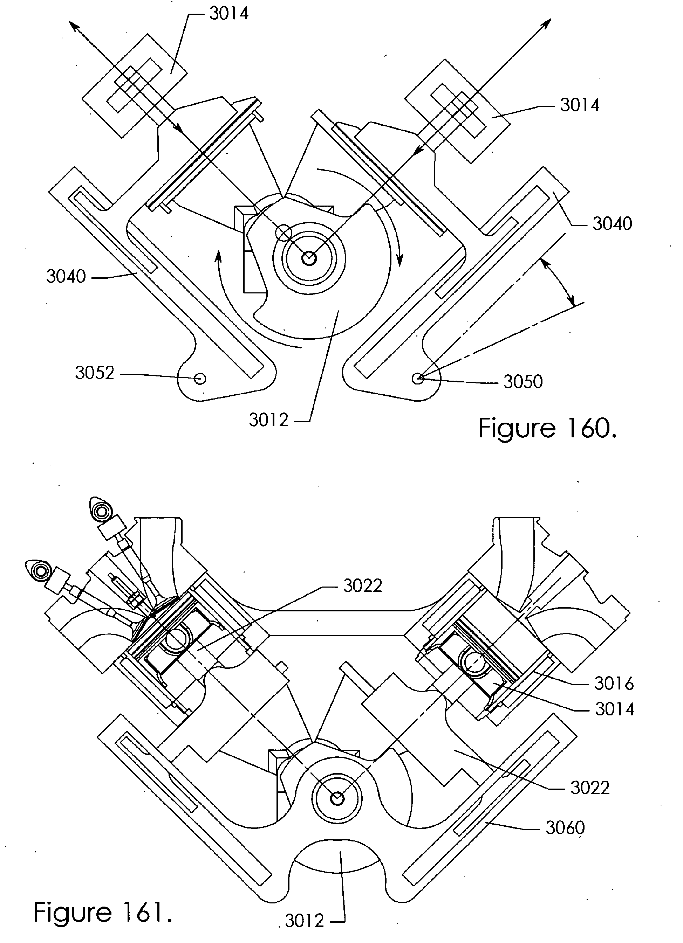

Figure 160 shows a design similar to that of the Figure 159 except that the slider channels 3040 are mounted upon separate axes 3050, 3052. As with the Figure 159 design movement of the slider channels 3040 about their axes of rotation causes a change in stroke length and motion of the pistons.

Figure 161 shows a variation in which the intermediate members 3022 engage in a unitary slider channel assembly 3060, which in turn is rotatably mounted on the crankshaft itself, so as to be rotatable about the crankshaft axis. Other than positioning of the axis of rotation, this design functions identically to the Figure 159 design.

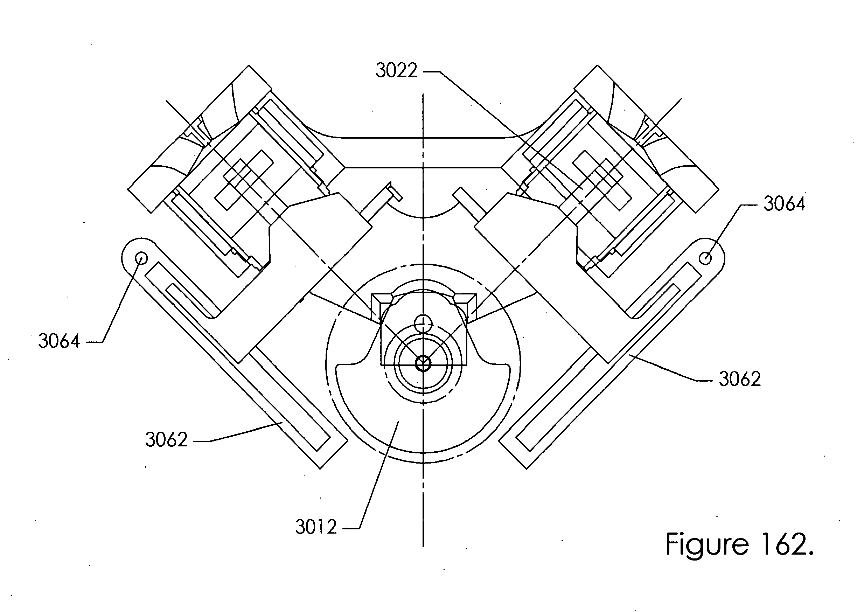

Figure 162 shows a further variation in which the intermediate members 3022 are mounted in slider channels 3062 pivoted about axes 3064. As with the Figures 159 and 160 devices, rotation of the slider channels results in changes to the motion and stroke length of the device.

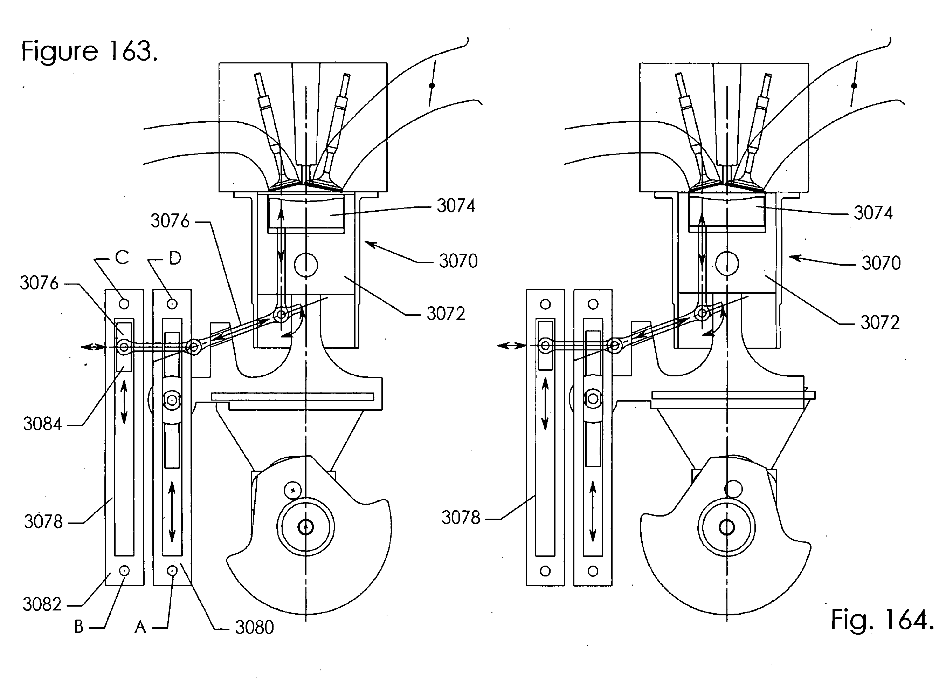

Figure 163 shows a design having a two part piston 3070, having an outer piston 3072 and an inner piston 3074. The outer piston 3072 is equivalent to the piston 3014 of the earlier designs. The inner piston 3074 is slidably mounted in the outer piston for motion parallel to the cylinder axis. A linkage system 3076 connects inner piston 3074 to a secondary slide member 3076 mounted in a secondary slide 3078. Both the primary slide and secondary slide are independently pivoted about separate axes 3080 and 3082.

When the axes of the primary and secondary slide are parallel the inner piston 3074 does not move relative to the outer piston. When the axes are not parallel the inner piston moves relative to the outer piston as the crankshaft rotates and the sliding members travel along the respective slide channels.

It will also be noted that the intermediate member is pivotably mounted on the piston, dispensing with the connecting rod. To provide the necessary degree of freedom, there is provided a separate sliding member 3084 which is pivotably attached to the intermediate member 3022.

The two sliders can also be move sideways so as to change the displacement or the compression ratio of the device. The sideways movement of the two sliders may be independent of each other.

Figure 164 shows a minor variation on the Figure 163 device in which the two sliders cannot pivot but can only move sideways.

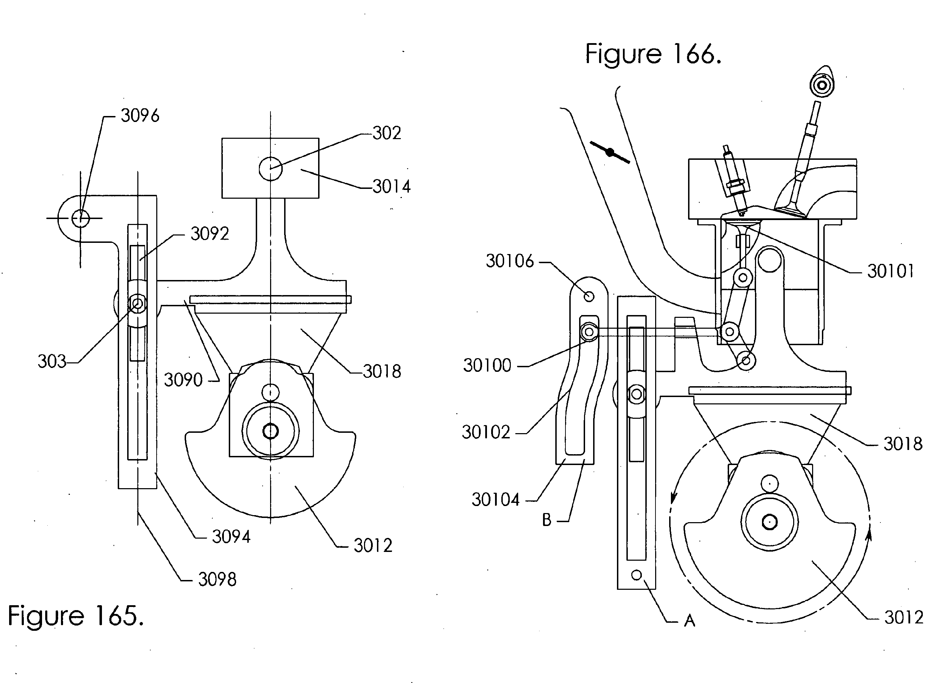

Figure 165 shows a further minor variation having an L-shaped intermediate member 3090 rotatably mounted on a slide member 3092. The slide member 3092 slides in slide channel 3094 which is pivoted about axis 3096. The axis 3096 is not located on the sliding axis 3098.

Figure 166 shows a design similar to the Figure 163 design in which a linkage mechanism for a valve 3101 has a rotatable follower 3100 which rolls along a non-linear slot 3102. Thus as the follower moves along the slot 3102, the position of the valve 3101 may be varied. The carrier 3104 is pivoted about axis 3106 to provide further control of the valve's position.

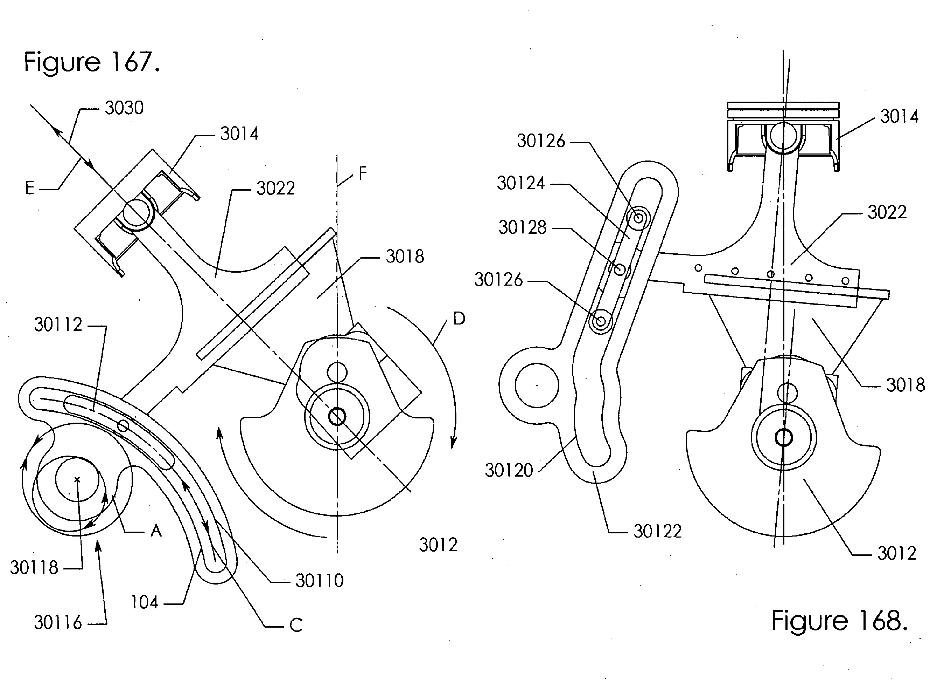

Figure 167 is similar to the Figure 165 device. In the Figure 167 design slot 30110 is arcuate and an arcuate shaped follower 30112 is provided to slide in the slot 30110. The carrier 104 is pivotably mounted by way of an eccentric 30116 about axis 30118. This enables the sideways position of the slot 30110 to be varied. The radius of the slot 30110 may be any value.

Figure 168 is a further variation of the Figure 167 design and is similar to the Figure 167 design except that the slot 30122 on the carrier 30122 is not arcuate but follows a multi radius path. To accommodate this the slider 30124 includes two rotatable followers 30126. Thus as the slider moves along the slot 30120 it moves sideways relative to the cylinder axis. Movement of the slider 30124 relative to the intermediate member 3022 is accommodated by pivotably mounting the two together at axis 30128.

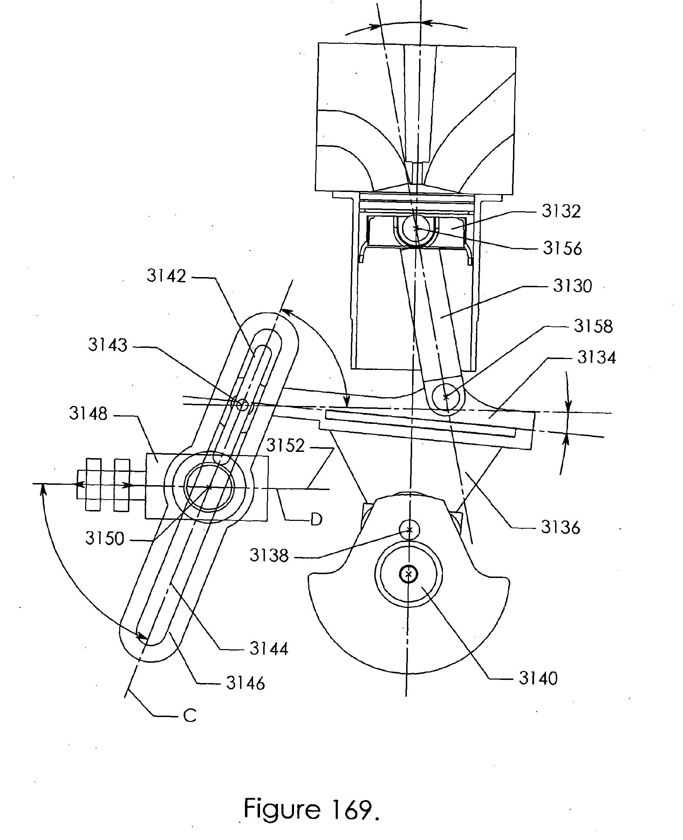

Figure 169 shows a design in which a connecting rod 3130 is pivotably connected to a piston 3132 and an intermediate member 3134. As with all of the designs the intermediate member is movable sideways relative to a connector means 3136 mounted on the big end bearing pin 3138 of crankshaft 3140. The intermediate member 3134 is pivotally connected to a slide member 3142 at 3143 which slides in slot 3144 of primary carrier 3146. The carrier 3146 is pivotally mounted on a secondary carrier 3148 at 3150. The secondary carrier 3148 is movable along axis 3152. This axis 3152 may be perpendicular to the cylinder axis or angle other than 90°. As can be seen, the intermediate member may be moved sideways so that the line 3154 joining the pivot points 3156 and 3158 of the connecting rod lies at an angle other than 90° to the cylinder axis.

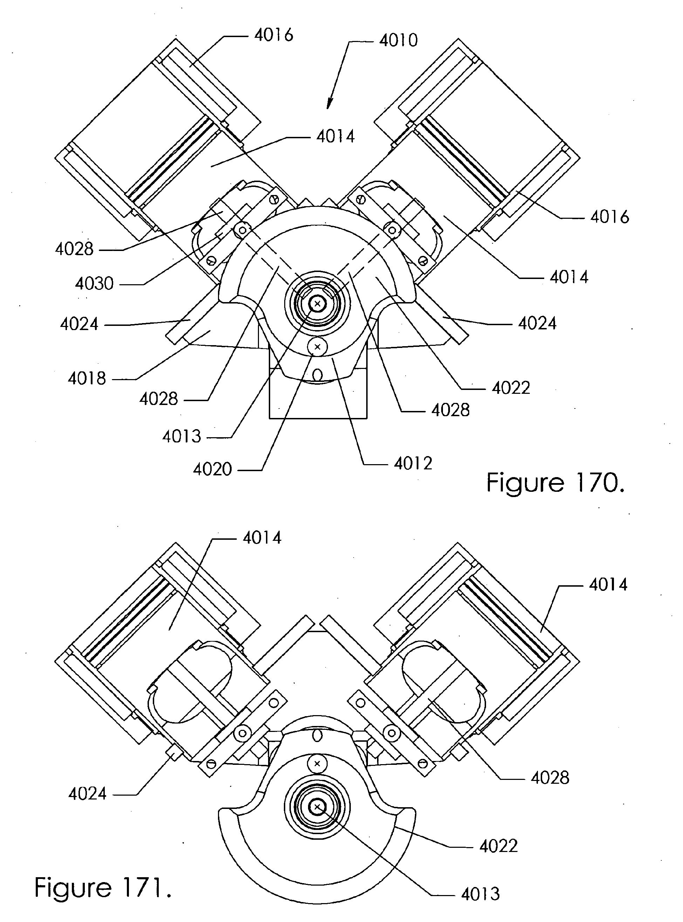

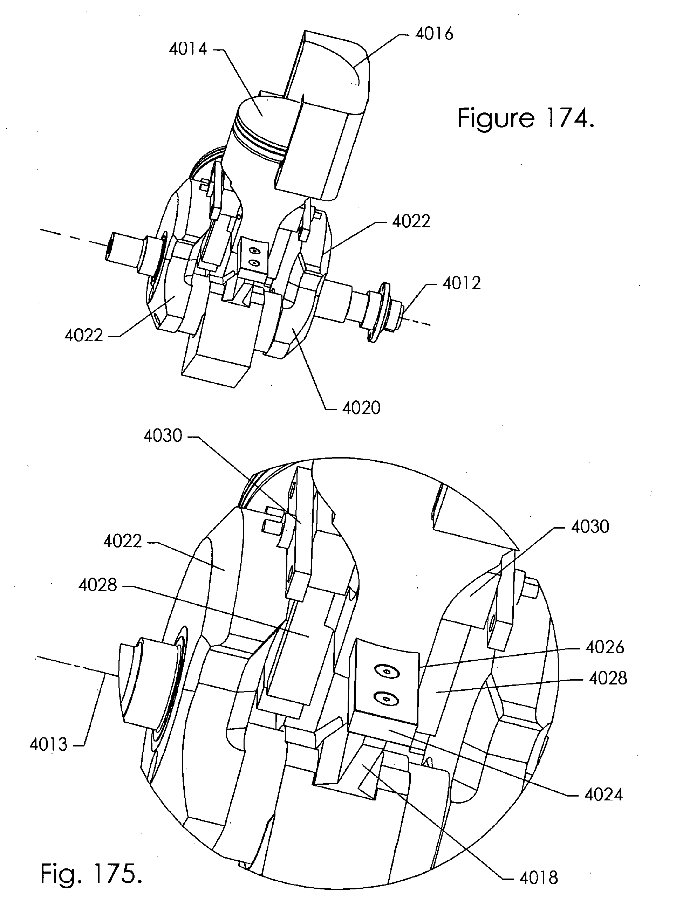

Referring to figures 170 to 177 there is shown a scotch yoke engine or pump according to the invention. The engine or pump has a crankshaft 4012 rotating about a crankshaft or main axis 4013 and two pistons 4014 reciprocating in cylinders 4016. The two pistons 4014 are connected to the crankshaft 4012 via a single connecting means or slider mechanism 4018, which is rotatably mounted on the big end bearing pin 4020 of the crankshaft. The big end bearing pin 4020 extends between webs 4022. The slider 4018 has two T- shaped tongues 4024 which slidably engage in corresponding slots 4026 in the pistons, the slots 4026 providing the first guide means in this embodiment. As the crankshaft rotates the slider 4018 slides relative to the pistons 4014, which are caused to reciprocate in the cylinders.

Extending downwards from the base area of each piston are two guide bars 4028 which provide the second guide means in this embodment. These bars 4028 extend on either side of the slider 4018 and slot 4026. In addition, each bar extends below the slot 4026 toward the main axis 4013. Whilst two bars 4028 per piston are shown, it will be appreciated that only one or more than two bars per piston may be used. Where two or more bars are used it is not essential that they be located symmetrically relative to the cylinder/piston axis; the bars may be positioned to one side of the slot 4026 or asymmetrically on both sides.

A corresponding number of third guide means 4030 are provided for the guide bars 4028 and are attached or integral with the crankcase. In the embodiment shown each guide 4030 includes a U-shaped channel in which the respective guide bar 4028 reciprocates.

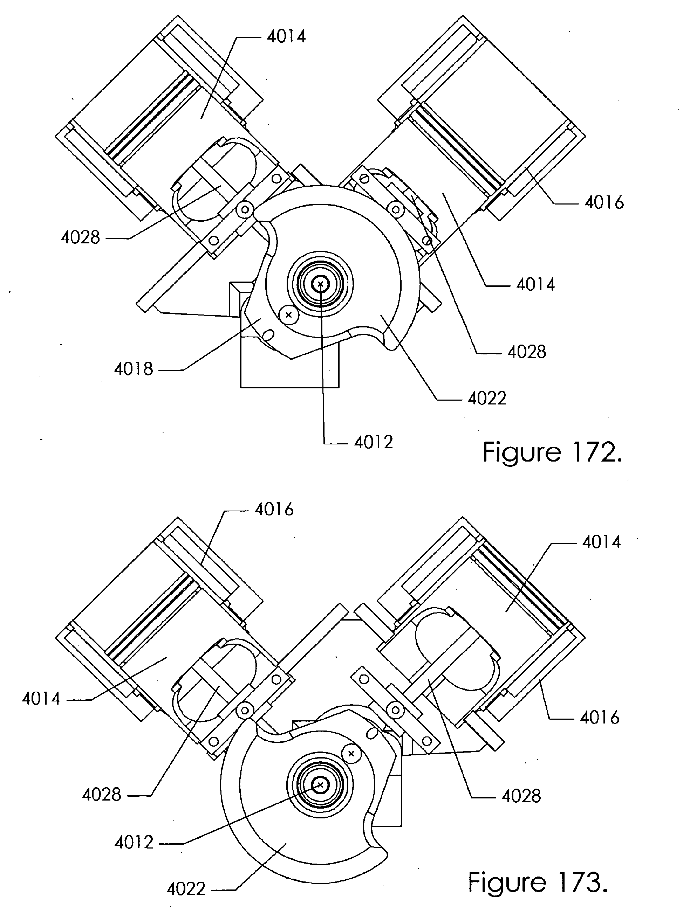

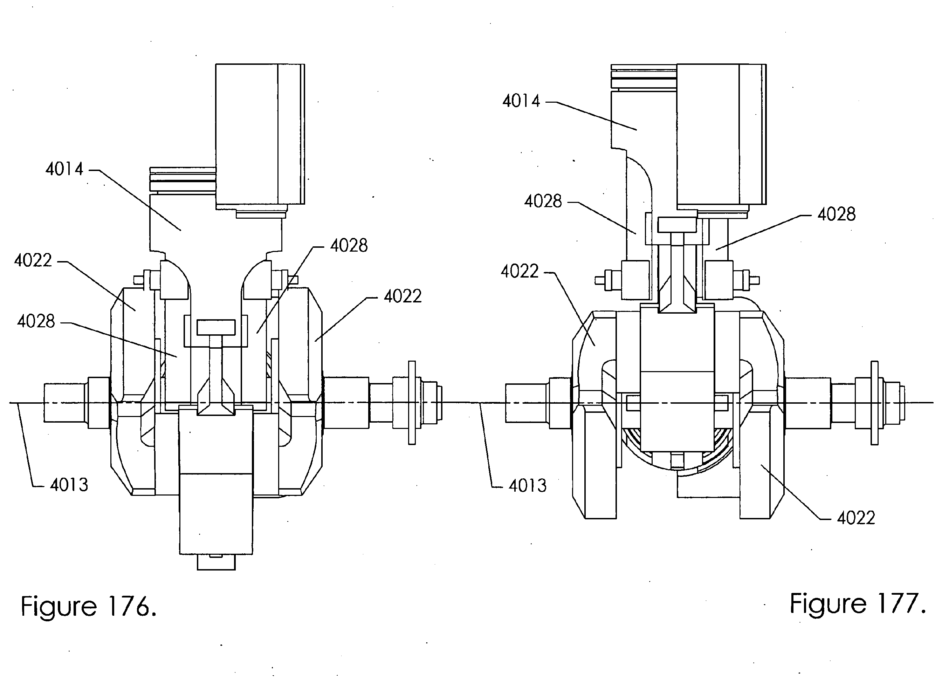

As best seen in Figures 176 and 177 the big end bearing pin 4020 is supported by two webs 4022. The guide bars 4028 are positioned on the piston 4014 to lie between the two webs 4022 when viewed from the side. In addition, as best seen in Figures 172 to 173, when viewed on end, the guide bars 4028 extend along the cylinder axis toward the main axis 4013. Thus the provision of the guide bars does not require additional space in the crankcase.

As the crankshaft 4012 rotates, the pistons 4014 reciprocate in their cylinders and, as seen in Figures 170 to 173, the guide bars 4028 move up and down with the pistons into and out of the volume swept by the big end bearing pin.

At bottom dead centre the guide bars 4028 may extend to be just clear of the sleeve 4034 of the slider and so allow the guides 4030 to lie as close to the swept volume of the crankshaft as possible. This allows for a compact configuration, with the distance between the piston crown 4036 and main axis 4013 to be minimised.

Figures 178 to 181 show conceptually components for building up yoke design assemblies.

Turning now to the design of Figure 178, there is shown a crankshaft mechanism with a main axis 7001, having two webs 7002, 7003 extending outwards of the main journal 7025. The webs support big ends 7005 and 7004 which have their own respective axis. The axes are offset by 30° to each other. The crankshaft is used in the scotch yoke engine or pump of figure 235 wherein the cylinder axes are at an angle to each other of 75°.

Figure 180 shows a scotch yoke type device according to the invention wherein the pistons 7008a and 7008b are disposed for reciprocation at 90 degrees about the main axis 7001, the crankshaft has at least one big end bearing pin and it has only one big end bearing pin axis 7010. Note the pistons are constrained to reciprocate along their respective paths A and B, and A and B are at 90 degrees to one another Steve they are constrained by second guide and third guide means. The pistons 7008a and 7008b are connected to the crankshaft big end bearing pins, by way of sliding engagement means 7012.

Figure 181 depicts a V-configuration scotch yoke type device wherein the pistons 7008a, 7008b are disposed about the main axis 7100 at 120 degrees from each other. Path B is 30 degrees rotated anti-clockwise from being at 90 degrees to path A. Further, one big end bearing pin axis is rotated 60 degrees anti-clockwise from the other big end bearing pin axis. Big end bearing pin axis 7110 is the axis for the piston that travels on the path A.

It will be appreciated that it is best if the pistons reciprocate in a manner that they are one half of a sinewave out of phase from each other. Provided that the pistons are of the same mass, the engine will be perfectly balanced. It is also obvious that the crankshaft disk and scotch yoke designs that are of V-configuration may be balanced in the same way and that X, horizontally opposed or 180 degree configuration devices may also be balanced similarly.

It is also clear that an engine designer may wish to construct a fluid scotch yoke type device of a type depicted and described herein wherein a degree of imbalance is in some way preferred, accordingly this application includes devices with their pistons displaced at not quite one quarter of a sine wave out from each other, say up to 10%-20% or even up to 50% of the sine wave out of true balance, this would still fit within the scope of the invention.

For the purpose of this discussion, the engine is a 90 degree V-twin, with the cylinders 45 degrees to the left and right of a vertical centre line. The engine is assumed to be rotating clockwise so that when the crankshaft is vertical, the left piston is going up and the right piston is at the same relative position in its cylinder but doing down.

The engine is assumed to be made up of the following components:

Crankshaft whose mass is concentrated in two positions namely the counterweight and the big-end.

Conrod whose mass is concentrated in 3 positions, the left slider, the right slider and the counterweight directly below the big-end.

The left and right pistons whose mass is assumed to be concentrated at the centre of their respective bores and some distance above the respective sliders.

The stationary parts of the engine (crank case, block, etc.) are assumed to rigidly mounted so they can be disregarded in considering engine balance issue.

Imagine we start assembling the engine as follows:

Install a crankshaft which is balanced on its own. That is, its centre of mass is at its centre of rotation, the main bearing. Clearly this is perfectly balanced.

Now add the component referred to as the "con-rod". Because the left and right slider mechanisms will be above the big end bearing pin, the conrod will require its own counterweight located directly below the big end bearing pin if we want its centre of gravity to be at the big end bearing pin. If we add to the crankshaft counterweight an amount calculated from the total mass of the conrod, we can keep the centre of gravity at the main bearing and the assembly so far will still be perfectly balanced.

Note that the conrod maintains the same orientation all the time so that it is in fact "orbiting". Because its centre of mass is at the big end bearing pin, it will have no tendency to rotate as the crankshaft rotates. If we reduced the mass of the conrod counterweight so that the conrod centre of mass was above the big end, then the conrod would tend to rock as the crankshaft rotated. Provided it is prevented from actually rocking, its centre of mass will still describe a circle of the same radius and can still be perfectly balanced by the crankshaft counterweight.

There is thus a design choice here whether to reduce the load on the slider mechanisms by balancing the conrod or whether to reduce the mass of the conrod and the mass of the crankshaft counterweight thereby reducing inertial forces generally. An alternative would be to prevent the conrod from rotating by other means such as a second crank mechanism.

If we now add the pistons, we put the engine out of balance. However, because the piston motion is perfectly simple harmonic and the pistons are 90 degrees out of phase, the two together are exactly equivalent to one piston mass travelling in a circle. We therefore only have to add to the crankshaft counterweight a mass calculated from the mass of one piston (and adjusted to allow for the ratio of crankshaft throw to crankshaft counterweight distance) and the whole engine remains perfectly balanced.

This is easiest to visualise if you orient the device so that the left piston appears to be moving vertically and the right piston moving horizontally. When the left piston is at its highest point, the crankshaft counterweight is at its lowest point. At the same instant, the "right-hand" piston is at mid-stroke and travelling to the right. As far as the horizontal motion of the crankshaft counterweight is concerned, it is at midstroke and travelling to the left. The crankshaft counterweight can therefore be adjusted to exactly balance both pistons.

The centre of mass of all moving parts of the engine remains exactly stationary. There are no higher order effects as in a conventional engine. These arise because the piston motion is not simple harmonic and the motion of a conventionally driven piston is not simple harmonic and the motion of a conventionally driven piston is not symmetrical near top and bottom dead centre.

It is also interesting to note that the internal kinetic energy of the present invention is also constant throughout its cycle. Provided the angle of the cylinders is 90 degrees, then the combined kinetic energy of the pistons is constant. This means that there is no tendency for the mechanism to resist rotating at constant angular velocity.

The following is the theory behind the balancing of the engine with offset big ends.

A is the angle between the bores of 2 cylinders in a V-configuration engine.

D is the angle between lines extending from the main axis to the big end bearing pins.

If D is set equal to 2*(A-90), the centre of gravity of the two pistons will be found to move in a circle so that it can easily be balanced by a counterweight on the crankshaft.

If the connecting rods are allowed to pivot relative to the pistons, we assume that the connecting rods are sufficiently long that the motion of the pistons is simple harmonic. Where pivoting is not allowed or limited to very small amounts the motion will inherently be simple harmonic motion to practical effect.

The mass of the connecting rods is ignored.

Angles are measured positive anticlockwise from the positive X axis.

Assume the first bore is a 0 degrees.

The second bore is at an angle A degrees.

When the big end bearing pin for the first piston is at 0 degrees (so that the first piston is at TDC) the big end bearing pin of the second piston is at D degrees.

Consider the general case when the big end bearing pin for the first piston is at R degrees and the big end bearing pin of the second piston is at D+R degrees.

The X co-ordinate of the first piston is Cos (R) measured with respect to its mean position.

The Y co-ordinate of the first piston is always zero.

The radius of the crankshaft for the second piston is also unit length, but in the general case we are considering, the value of the radius projected onto the axis of the second bore is Cos(A-D-R).

Since we are only interested in variations in the position of the centre of gravity of the pistons, we can take the second piston to be at:

$$X = \text{Cos } (A\text{-}D\text{-}R) * \text{Cos}(A)$$

$$Y = \text{Cos } (A\text{-}D\text{-}R) * \text{Sin}(A)$$

The centre of gravity of the two pistons together can be taken as:

$$X = \text{Cos } (A\text{-}D\text{-}R) * \text{Cos}(A) + \text{Cos}(R)$$

$$Y = \text{Cos } (A\text{-}D\text{-}R) * \text{Sin}(A) + 0$$

Note that these should both be divided by 2, but this is omitted to simplify the appearance of the algebraic expressions.

It turns out that for any value of A, if we set D=2* (A-90), then the centre of gravity of both pistons together moves in a circle and can be easily balanced by a counterweight attached to the crankshaft.

We can prove this is the case by substituting 2*A-180 for D in the above expressions which become

$$X = \text{Cos } (A\text{-}2*A+180\text{-}R) * \text{Cos}(A) + \text{Cos}(R)$$

$$Y = \text{Cos } (A\text{-}2*A+180\text{-}R) * \text{Sin}(A) + 0$$

which become

$$X = \text{Cos } (\text{-}A+180\text{-}R) * \text{Cos}(A) + \text{Cos}(R)$$

$$Y = \text{Cos } (\text{-}A+180\text{-}R) * \text{Sin}(A) + 0$$

which equals

$$X = \text{-Cos } (A+R) * \text{Cos}(A) + \text{Cos}(R)$$

$$Y = -\text{Cos}(A+R) * \text{Sin}(A)$$

simplifying we get

$$X = \text{Sin}(A) * (\text{Cos}(R) * \text{Sin}(A) + \text{Sin}(R) * \text{Cos}(A))$$

$$Y = \text{Sin}(A) * (-\cos(A) * \text{Cos}(R) + \text{Sin}(A) * (\text{Sin}(R))$$

or

$$X = \text{Sin}(A) * \text{Sin}(A+R)$$

$$Y = \text{Sin}(A) * \text{Cos}(A+R)$$

This is the equation of a point moving in a circle of radius Sin (A).

Thus the motion of the two pistons together can be counterbalanced by a single mass, equal in mass to one piston mass rotating on a radius of Sin(A) times the crankshaft radius. (The fact that there are actually two pistons compensates for the factor of 2 which was omitted in the expressions for X and Y above).

It will be appreciated that when A = 90°, ie a 90° V-configuration, that D = 0°, ie, the axes of the two big end bearing pins are not offset but are coaxial. Thus a 90° V-configuration with a single big end bearing pin is merely a special case where D = 0°.

Figures 182 and 183 show a connecting rod 7200 assembly and a piston assembly 7300 for use together in a scotch yoke engine or pump (not shown) having only one piston assembly 7300 mounted on the or each connecting rod 7200. The connecting rod 7200 has a T shaped engagement means 7202 for sliding engagement with a T shaped slot 7304 on the piston assembly. A counter weight 7204 is provided opposite the big end bearing pin journal 7206 to partially or fully counterbalance the mass of the connecting rod and the piston assembly located on the other side of the big end bearing pin journal 7206. The piston assembly 7300 also includes a piston crown 7302 and longitudinally extending second guide means 7306 for engagement with third guide means to constrain the piston assembly to reciprocate along a linear path. It will be noted that the piston assembly is a made up unit with the various components bolted together. Piston crown 7302 is attached to the central assembly 7310 via a bolt 7308; guides 7306 are attached to the central assembly 7310 via bolts 7312.

It will be apparent to those skilled in the art that many modifications and variations may be made to the embodiments described herein without departing from the spirit or scope of the invention.

**Industrial Applicability**

The invention has industrial applicability in relation to fluid machines in general and more specifically to internal combustion engines and pumps.

**Claims**

**1.** A scotch yoke engine or pump (2010; 4010) including:

a crankshaft (4012) having a main axis (4013) and having a big end bearing pin (4020) which has a big end bearing pin axis, the crankshaft adapted for rotation about the main axis and the big end bearing pin being adapted to orbit the main axis during crankshaft rotation, the big end bearing pin adapted to sweep a first volume as it orbits the main axis;

18

connecting means (4018) rotatably mounted on the big end bearing pin and adapted to orbit the main axis during crankshaft rotation;
a cylinder (2014; 4016) having a cylinder axis, the cylinder axis being perpendicular to the main axis;
a piston (2012; 4014) having a piston axis and including:

(a) a piston crown having a cross sectional area perpendicular to the piston axis;
(b) first guide means (2018; 4026) elongate along an axis extending perpendicular to the piston axis;
(c) second guide means (2030; 4028) elongate along an axis extending parallel to the piston axis and having a first end and a second end;

the piston mounted for reciprocation along the piston axis;
a second volume defined by a projection of the piston crown cross sectional area along the piston axis in the direction of the crankshaft
the first guide means being located only to that side of the big end bearing pin axis lying between the big end bearing pin axis and the piston crown;
the first guide means engaging the connecting means whereby the connecting means is constrained to reciprocate along the first guide means during crankshaft rotation;
a crank case or block including third guide means (2034; 4030) adapted to engage the second guide means, the second guide means and the third guide means cooperating to substantially prevent rotation of the piston around an axis parallel to the main axis;
**characterized in that**:

(i) the second guide means (2030; 4028) and the third guide means (2034; 4030) are located for engagement only within the second volume;
(ii) the second guide means (2030; 4028) is positioned to a side of the first guide means (2018; 4026), the first end of the second guide means is located closer to the piston crown than is the first guide means, and when the piston is at TDC the second end of the second guide means is located closer to the big end bearing pin axis than is the first guide means; and
(iii) the second guide means (2030; 4028) is adapted to be moved in and out of the first volume during crankshaft rotation such that the second guide means is outside the first volume when the piston is at TDC.

2. A scotch yoke engine or pump according to claim 1, wherein the piston includes at least two second guide means to the same side of the first guide means and each respective second guide means is engaged by a respective third guide means.

3. A scotch yoke engine or pump (2010; 4010) according to claim 1 wherein the piston (2012; 4014) includes at least two second guide means (2030; 4028), there being at least one second guide means located on a first side of the first guide means (2018; 4026) and at least one other second guide means located on the opposite side of the first guide means and each second guide means engaged by a respective third guide means (2034; 4030).

4. A scotch yoke engine or pump (2010; 40 10) according to claim 1 wherein the second guide means (2030; 4028) is chosen from a group including: a rod, a tube, a web, or a slot, and the third guide means (2034; 4030) includes a surface shape adapted for engagement with the second guide means.

5. A scotch yoke engine or pump (2010; 4010) according to claim 1 wherein the first guide means extends within 5° of perpendicular relative to the piston axis.

6. A scotch yoke engine or pump (2010; 4010) according to claim 1 wherein the engagement of the second guide means (2030; 4028) by the third guide means (2034; 4030) is such that rotation of the first guide means (2018; 4026) of the piston around an axis parallel to the main axis (4013) is substantially prevented.

7. A scotch yoke engine or pump (2010; 4010) according to claim 1, which includes a pair of pistons (2012; 4014) in a V-configuration, each piston of the pair mounted for reciprocation within a respective cylinder (2014; 4016), the crankshaft adapted to be moved along the bisector of the included angle such that the compression ratio of the pair of pistons within their respective cylinders may be raised or lowered without change of phase of either piston motion relative to crankshaft rotation.

8. A scotch yoke engine or pump (2010; 4010) according to claim 1, which includes a pair of pistons (2012; 4014) in a V-configuration, each piston of the pair mounted for reciprocation within a respective cylinder (2014; 4016), the crankshaft adapted to be moved along a linear path such that the compression ratio of each piston within its respective cylinder may be altered equally.

9. A scotch yoke engine or pump (2010; 4010) according to claim 1, in which the crankshaft is adapted to be moved along a path such that the compression ratio of the piston within the cylinder may be raised or lowered.

10. A scotch yoke engine or pump (2010; 4010) according to claim 9, in which the path is linear.

11. A scotch yoke engine or pump (2010; 4010) according to claim 9, in which the path is arcuate.

12. A scotch yoke engine or pump according to claim 1 wherein the connecting means includes adjustable slider means, the connecting means incorporating hydraulic ram means within the connecting means and being adapted to raise and to lower the adjustable slider means relative to the cylinder and the connecting means.

13. A scotch yoke engine or pump according to claim 1 wherein the connecting means includes adjustable slider means, the connecting means incorporating hydraulic ram means within the connecting means and being adapted to vary the angle of the adjustable slider means relative to the cylinder to alter the phase of the piston motion relative to the crankshaft angle.

14. A scotch yoke engine or pump according to claim 1 including means for adjusting the distance along the piston axis over which the piston crown may travel.

15. A scotch yoke engine or pump according to claim 1 in which the piston crown and the second guide means are parts of a multi-part piston assembly including intermediate connecting means interconnecting the piston crown of the multi-part piston assembly with the first guide means of the multi-part piston assembly.

16. A scotch yoke engine or pump according to Claim 1 in which the cylinder axis is not radial to the main axis.

**Patentansprüche**

1. Kurbelschlaufenmotor oder -pumpe (2010; 4010), der/die Folgendes aufweist:

eine Kurbelwelle (4012) mit einer Hauptachse (4013) und mit einem Pleuellagerbolzen (4020), der eine Pleuellagerbolzenachse hat, wobei die Kurbelwelle zur Drehung um die Hauptachse ausgeführt ist und der Pleuellagerbolzen zum Kreisen um die Hauptachse während der Kurbelwellendrehung ausgeführt ist, wobei der Pleuellagerbolzen so ausgeführt ist, dass er beim Kreisen um die Hauptachse ein erstes Volumen beschreibt,
ein Verbindungsmittel (4018), das drehbar am Pleuellagerbolzen montiert ist und zum Kreisen um die Hauptachse während der Kurbelwellendrehung ausgeführt ist;
einen Zylinder (2014; 4016) mit einer Zylinderachse, wobei die Zylinderachse senkrecht zur Hauptachse ist;
einen Kolben (2012; 4014), der eine Kolbenachse hat und Folgendes aufweist:

a) einen Kolbenboden mit einer zu der Kolbenachse senkrechten Querschnittsfläche;
b) ein erstes Führungsmittel (2018; 4026), das entlang einer senkrecht zu der Kolbenachse verlaufenden Achse länglich ist;
c) ein zweites Führungsmittel (2030; 4028), das entlang einer parallel zu der Kolbenachse verlaufenden Achse länglich ist und ein erstes Ende und ein zweites Ende hat;

der Kolben ist zur Hin- und Herbewegung entlang der Kolbenachse montiert;
ein zweites Volumen wird von einer Projektion der Querschnittsfläche des Kolbenbodens entlang der Kolbenachse in der Richtung der Kurbelwelle definiert;
das erste Führungsmittel befindet sich nur auf der Seite der Pleuellagerbolzenachse, die zwischen der Pleuellagerbolzenachse und dem Kolbenboden liegt;
das erste Führungsmittel ist mit dem Verbindungsmittel in Eingriff, wodurch das Verbindungsmittel während der Kurbelwellendrehung zur Hin- und Herbewegung entlang dem ersten Führungsmittel gezwungen ist;
ein Kurbelgehäuse oder -gehäuseblock mit einem dritten Führungsmittel (2034; 4030) für den Eingriff mit dem zweiten Führungsmittel, wobei das zweite Führungsmittel und das dritte Führungsmittel kooperieren, um im Wesentlichen die Drehung des Kolbens um eine zur Hauptachse parallele Achse zu verhindern;
**dadurch gekennzeichnet, dass**

i) das zweite Führungsmittel (2030; 4028) und das dritte Führungsmittel (2034; 4030) für den Eingriff nur innerhalb des zweiten Volumens angeordnet sind;

ii) das zweite Führungsmittel (2030; 4028) auf einer Seite des ersten Führungsmittels (2018; 4026) positioniert ist, wobei das erste Ende des zweiten Führungsmittels näher am Kolbenboden liegt als das erste Führungsmittel und, wenn der Kolben am oberen Totpunkt ist, das zweite Ende des zweiten Führungsmittels näher an der Pleuellagerbolzenachse liegt als das erste Führungsmittel; und

iii) das zweite Führungsmittel (2030; 4028) so ausgeführt ist, dass es während der Kurbelwellendrehung in das erste Volumen hinein- und aus ihm herausbewegt wird, so dass das zweite Führungsmittel sich außerhalb des ersten Volumens befindet, wenn der Kolben am oberen Totpunkt ist.

2. Kurbelschlaufenmotor oder -pumpe nach Anspruch 1, wobei der Kolben wenigstens zwei zweite Führungsmittel auf der gleichen Seite des ersten Führungsmittels aufweist und jedes zweite Führungsmittel jeweils in einem jeweiligen dritten Führungsmittel in Eingriff ist.

3. Kurbelschlaufenmotor oder -pumpe (2010; 4010) nach Anspruch 1, wobei der Kolben (2012; 4014) wenigstens zwei zweite Führungsmittel (2030; 4028) hat, wobei sich wenigstens ein zweites Führungsmittel auf einer ersten Seite des ersten Führungsmittels (2018; 4026) befindet und wenigstens ein weiteres zweites Führungsmittel sich auf der entgegengesetzten Seite des ersten Führungsmittels befindet und jedes zweite Führungsmittel in einem jeweiligen dritten Führungsmittel (2034; 4030) in Eingriff ist.

4. Kurbelschlaufenmotor oder -pumpe (2010; 4010) nach Anspruch 1, wobei das zweite Führungsmittel (2030; 4028) aus einer Gruppe ausgewählt ist, die Folgendes umfasst: eine Stange, ein Rohr, einen Steg oder eine Aussparung, und das dritte Führungsmittel (2034; 4030) eine für den Eingriff mit dem zweiten Führungsmittel angepasste Oberflächenform hat.

5. Kurbelschlaufenmotor oder -pumpe (2010; 4010) nach Anspruch 1, wobei das erste Führungsmittel innerhalb von 5° zur Senkrechten relativ zu der Kolbenachse verläuft.

6. Kurbelschlaufenmotor oder -pumpe (2010; 4010) nach Anspruch 1, wobei der Eingriff des zweiten Führungsmittels (2030; 4028) im dritten Führungsmittel (2034; 4030) so ist, dass die Drehung des ersten Führungsmittels (2018; 4026) des Kolbens um eine zu der Hauptachse (4013) parallele Achse im Wesentlichen verhindert wird.

7. Kurbelschlaufenmotor oder -pumpe (2010; 4010) nach Anspruch 1, der/die ein Kolbenpaar (2012; 4014) in V-Konfiguration aufweist, wobei jeder Kolben des Paares zur Hin- und Herbewegung innerhalb eines jeweiligen Zylinders (2014; 4016) eingebaut ist, wobei die Kurbelwelle zur Bewegung entlang der Halbierenden des eingeschlossenen Winkels ausgeführt ist, so dass das Verdichtungsverhältnis des Kolbenpaares innerhalb seiner jeweiligen Zylinder ohne Phasenänderung der Bewegung beider Kolben relativ zur Kurbelwellendrehung vergrößert oder verkleinert werden kann.

8. Kurbelschlaufenmotor oder -pumpe (2010; 4010) nach Anspruch 1, der/die ein Kolbenpaar (2012; 4014) in V-Konfiguration aufweist, wobei jeder Kolben des Paares zur Hin- und Herbewegung innerhalb eines jeweiligen Zylinders (2014; 4016) eingebaut ist, wobei die Kurbelwelle zur Bewegung entlang einem linearen Weg ausgeführt ist, so dass das Verdichtungsverhältnis jedes Kolbens in seinem jeweiligen Zylinder gleichermaßen geändert werden kann.

9. Kurbelschlaufenmotor oder -pumpe (2010; 4010) nach Anspruch 1, wobei die Kurbelwelle zum Bewegen an einem Weg entlang ausgeführt ist, so dass das Verdichtungsverhältnis des Kolbens in dem Zylinder vergrößert oder verkleinert werden kann.

10. Kurbelschlaufenmotor oder -pumpe (2010; 4010) nach Anspruch 9, wobei der Weg linear ist.

11. Kurbelschlaufenmotor oder -pumpe (2010; 4010) nach Anspruch 9, wobei der Weg gekrümmt ist.

12. Kurbelschlaufenmotor oder -pumpe nach Anspruch 1, wobei das Verbindungsmittel verstellbare Gleitsteinmittel aufweist, wobei das Verbindungsmittel hydraulische Druckzylindermittel in dem Verbindungsmittel enthält und zum Heben und Senken des verstellbaren Gleitsteinmittels relativ zu dem Zylinder und dem Verbindungsmittel ausgeführt ist.

**13.** Kurbelschlaufenmotor oder -pumpe nach Anspruch 1, wobei das Verbindungsmittel verstellbare Gleitsteinmittel aufweist, wobei das Verbindungsmittel hydraulische Druckzylindermittel in dem Verbindungsmittel enthält und zum Variieren des Winkels des verstellbaren Gleitsteinmittels relativ zu dem Zylinder ausgeführt ist, um die Phase der Kolbenbewegung relativ zu dem Kurbelwinkel zu ändern.

**14.** Kurbelschlaufenmotor oder -pumpe nach Anspruch 1 mit einem Mittel zum Verstellen der Distanz entlang der Kolbenachse, die sich der Kolbenboden bewegen kann.

**15.** Kurbelschlaufenmotor oder -pumpe nach Anspruch 1, wobei der Kolbenboden und das zweite Führungsmittel Teil einer mehrteiligen Kolbenbaugruppe sind, die Zwischenverbindungsmittel hat, welche den Kolbenboden der mehrteiligen Kolbenbaugruppe und das erste Führungsmittel der mehrteiligen Kolbenbaugruppe miteinander verbinden.

**16.** Kurbelschlaufenmotor oder -pumpe nach Anspruch 1, wobei die Zylinderachse nicht radial zur Hauptachse ist.


**Revendications**

**1.** Moteur ou pompe à excentrique Scotch (2010 ; 4010) comprenant :

un vilebrequin (4012) ayant un axe principal (4013) et ayant une broche de coussinet de tête de bielle (4020) qui a un axe de broche de coussinet de tête de bielle, le vilebrequin étant adapté à des fins de rotation autour de l'axe principal et la broche de coussinet de tête de bielle étant adaptée afin de décrire une orbite autour de l'axe principal pendant la rotation du vilebrequin, la broche de coussinet de tête de bielle étant adaptée pour balayer un premier volume alors qu'elle décrit une orbite autour de l'axe principal ;
un moyen de connexion (4018) monté de manière rotative sur la broche de coussinet de tête de bielle et adapté afin de décrire une orbite autour de l'axe principal pendant la rotation du vilebrequin ;
un cylindre (2014 ; 4016) ayant un axe de cylindre, l'axe de cylindre étant perpendiculaire par rapport à l'axe principal ;
un piston (2012 ; 4014) ayant un axe des piston et comprenant :

(a) une tête de piston ayant une section transversale perpendiculaire par rapport à l'axe de piston ;
(b) un premier moyen de guidage (2018 ; 4026) allongé le long d'un axe s'étendant de manière perpendiculaire par rapport à l'axe de piston ;
(c) un deuxième moyen de guidage (2030 ; 4028) allongé le long d'un axe s'étendant de manière parallèle par rapport à l'axe de piston et ayant une première extrémité et une deuxième extrémité ;

le piston étant monté à des fins de mouvement de va-et-vient le long de l'axe de piston ;
un deuxième volume défini par une projection de la section transversale de la tête de piston le long de l'axe de piston dans la direction du vilebrequin ;
le premier moyen de guidage étant situé uniquement de ce côté de l'axe de la broche de coussinet de tête de bielle reposant entre l'axe de la broche de coussinet de tête de bielle et la tête de piston ;
le premier moyen de guidage entrant en prise avec le moyen de connexion ce par quoi
le moyen de connexion est contraint de décrire un mouvement de va-et-vient le long du premier moyen de guidage pendant la rotation du vilebrequin ;
un carter de vilebrequin ou coulisseau comprenant un troisième moyen de guidage (2034 ; 4030) adapté pour entrer en prise avec le deuxième moyen de guidage, le deuxième moyen de guidage et le troisième moyen de guidage coopérant pour dans une large mesure empêcher toute rotation du piston autour d'un axe parallèle par rapport à l'axe principal ;
**caractérisé en ce que :**

(i) le deuxième moyen de guidage (2030 ; 4028) et le troisième moyen de guidage (2034 ; 4030) sont situés à des fins de prise uniquement à l'intérieur du deuxième volume ;
(ii) le deuxième moyen de guidage (2030 ; 4028) est positionné sur un côté du premier moyen de guidage (2018 ; 4026), la première extrémité du deuxième moyen de guidage est située plus près de la tête de piston que ne l'est le premier moyen de guidage, et quand le piston est au point mort haut la deuxième extrémité du deuxième moyen de guidage est située plus près de l'axe de la broche de coussinet de tête de bielle que ne l'est le premier moyen de guidage ; et

(iii) le deuxième moyen de guidage (2030 ; 4028) est adapté pour entrer et sortir du premier volume pendant la rotation du vilebrequin de telle manière que le deuxième moyen de guidage se trouve à l'extérieur du premier volume quand le piston est au point mort haut.

2. Moteur ou pompe à excentrique Scotch selon la revendication 1, dans lequel le piston comprend au moins deux deuxièmes moyens de guidage du même côté que le premier moyen de guidage et chaque deuxième moyen de guidage respectif est mis en prise par un troisième moyen de guidage respectif.

3. Moteur ou pompe à excentrique Scotch (2010 ; 4010) selon la revendication 1, dans lequel le piston (2012 ; 4014) comprend au moins deux deuxièmes moyens de guidage (2030 ; 4028), sous réserve d'au moins un deuxième moyen de guidage situé sur un premier côté du premier moyen de guidage (2018 ; 4026) et d'au moins un autre deuxième moyen de guidage situé du côté opposé du premier moyen de guidage et chaque deuxième moyen de guidage étant mis en prise par un troisième moyen de guidage respectif (2034 ; 4030).

4. Moteur ou pompe à excentrique Scotch (2010 ; 4010) selon la revendication 1, dans lequel le deuxième moyen de guidage (2030 ; 4028) est choisi parmi un groupe comprenant : une tige, un tube, un bras, ou une fente, et le troisième moyen de guidage (2034 ; 4030) comprend une forme de surface adaptée à des fins de prise avec le deuxième moyen de guidage.

5. Moteur ou pompe à excentrique Scotch (2010 ; 4010) selon la revendication 1, dans lequel le premier moyen de guidage s'étend dans les 5° de la perpendiculaire par rapport à l'axe de piston.

6. Moteur ou pompe à excentrique Scotch (2010 ; 4010) selon la revendication 1, dans lequel la prise du deuxième moyen de guidage (2030 ; 4028) par le troisième moyen de guidage (2034 ; 4030) est telle que la rotation du premier moyen de guidage (2018 ; 4026) du piston autour d'un axe parallèle par rapport à l'axe principal (4013) est dans une large mesure empêchée.

7. Moteur ou pompe à excentrique Scotch (2010 ; 4010) selon la revendication 1, qui comprend une paire de pistons (2012 ; 4014) selon une configuration en V, chaque piston de la paire étant monté à des fins de mouvement de va-et-vient à l'intérieur d'un cylindre respectif (2014 ; 4016), le vilebrequin étant adapté pour se déplacer le long de la bissectrice de l'angle de dégagement de telle manière que le rapport de compression de la paire de pistons à l'intérieur de leurs cylindres respectifs peut être élevé ou abaissé sans changement de phase du mouvement de l'un ou de l'autre des pistons par rapport à la rotation du vilebrequin.

8. Moteur ou pompe à excentrique Scotch (2010 ; 4010) selon la revendication 1, qui comprend une paire de pistons (2012 ; 4014) selon une configuration en V, chaque piston de la paire étant monté à des fins de mouvement de va-et-vient à l'intérieur d'un cylindre respectif (2014 ; 4016), le vilebrequin étant adapté pour se déplacer le long d'une trajectoire linéaire de telle manière que le rapport de compression de chaque piston à l'intérieur de son cylindre respectif peut être modifié de manière égale.

9. Moteur ou pompe à excentrique Scotch (2010 ; 4010) selon la revendication 1, dans lequel le vilebrequin est adapté pour être déplacé le long d'une trajectoire de telle manière que le rapport de compression du piston à l'intérieur du cylindre peut être élevé ou abaissé.

10. Moteur ou pompe à excentrique Scotch (2010 ; 4010) selon la revendication 9, dans lequel la trajectoire est linéaire.

11. Moteur ou pompe à excentrique Scotch (2010 ; 4010) selon la revendication 9, dans lequel la trajectoire est arquée.

12. Moteur ou pompe à excentrique Scotch selon la revendication 1, dans lequel le moyen de connexion comprend un moyen coulissant réglable, le moyen de connexion incorporant un moyen de type vérin hydraulique à l'intérieur du moyen de connexion et étant adapté pour élever ou abaisser le moyen coulissant réglable par rapport au cylindre et au moyen de connexion.

13. Moteur ou pompe à excentrique Scotch selon la revendication 1, dans lequel le moyen de connexion comprend un moyen coulissant réglable, le moyen de connexion incorporant un moyen de type vérin hydraulique à l'intérieur du moyen de connexion et étant adapté pour varier l'angle du moyen coulissant réglable par rapport au cylindre pour modifier la phase du mouvement de piston par rapport à l'angle du vilebrequin.

**14.** Moteur ou pompe à excentrique Scotch selon la revendication 1, comprenant un moyen permettant de régler la distance le long de l'axe de piston que la tête de piston peut parcourir.

**15.** Moteur ou pompe à excentrique Scotch selon la revendication 1, dans lequel la tête de piston et le deuxième moyen de guidage font partie d'un ensemble de piston à plusieurs parties comprenant un moyen de connexion intermédiaire connectant la tête de piston de l'ensemble de piston à plusieurs parties au premier moyen de guidage de l'ensemble de piston à plusieurs parties.

**16.** Moteur ou pompe à excentrique Scotch selon la revendication 1, dans lequel l'axe de cylindre n'est pas radial par rapport à l'axe principal.

Figure 1.

Figure 2.

## Figure 3.

## Figure 4.

Fig. 5.

34

50

32

32

12

14

16

18

46

40

42

---

Fig. 6.

84

82

82

84

18

80

A

A

12

Figure 7.

Figure 8.

## Figure 9.

94
90
92
12

## Figure 10.

108
102
106
110
100
112
18
104
116
112
114

Fig. 11.

Fig. 12.

Fig. 13.

Fig. 14.

Fig. 15.

Fig. 16.

Fig. 17.

Fig. 18.

Fig. 19.

Fig. 20.

Fig. 21.

Fig. 22.

Fig. 23.

# Figure 24.

# Figure 25.

Fig. 26.

356
354
352
358
350

Fig. 27.

360
364
366
362

Fig. 28.

378
372
376
374
370

Fig. 29.

388
386
380
384
382

Fig. 30.

398
392
400
396
394
400
390

Fig. 31.

418
414
410
416
412
350

EP 1 171 689 B1

**Fig. 32.**

422
420
424
350

**Fig. 33.**

438
442
434
438
440
436
50°
35°
440
432
430

**Fig. 35.**

**Fig. 36.**

**Fig. 34.**

EP 1 171 689 B1

Fig. 37.

Fig. 38.

Fig. 39.

Fig. 41.

Fig. 40.

Fig. 42.

EP 1 171 689 B1

Figure 43.

Figure 44.

Figure 46.

Figure 45.

Figure 47.

Figure 50.

2042

2018

2040

2032

2058

2056

2018

2032

Fig 51.

2032

2046

2048

2044

2018

2064

2062

2060

2018

2062

2064

Fig. 48.

2052

2050

2018

2052

18

2066

2068

2070

Figure 49.

Figure 52.

Figure 53.

Figure 56.

2074

2072

2084

2082

2018

2077

2076

2018

2086

2018

2088

2018

2079

2078

Fig. 54.

Fig 57.

2079

2078

2080

2092

2090

2018

2092

2077

Figure 55.

Figure 58.

Figure 59.

2096

2094

2018

Fig. 60.

20100

2098

18

20100

Figure 61.

20102

18

Figure 62.

2084

2082

Fig 63.

20106

20106

20104

18

20106

20106

Figure 64.

20108

20110

20108

20106

2018

20110

# Figure 65.

20116 — 20114

20112

2018

20114

20116

# Fig. 66.

20122

20120

118

2018

# Figure 67.

20126

20124

2018

20126

# Figure 68.

20132 — 20134 — 20130

20128

2018

# Fig 69.

20138

20136

2018

20138

# Figure 70.

20144

20142

20140

2018

20142

20144

# Figure 71.

20148

20146

2018

20148

# Figure 74.

20158

20156

2018

20158

20154

20152

20153

# Fig. 72.

# Fig 75.

20162

20160

# Figure 73.

20168

20168

20166

2018

# Figure 76.

Figure 77.

Figure 80.

Fig 81.

Figure 78.

Figure 79.

Figure 82.

## Figure 83.

20202

20204

20204

20200

2018

## Figure 86.

20330

20228

2018

230

## Fig. 84.

20210

20206

20208

20214

20216

20218

20212

## Fig. 87.

20234

20232

18

20234

## Fig. 85.

20226

20222

20224

20220

2018

20226

20222

## Figure 88.

20238

20240

20240

20236

2018

20242

Figure 89.

20246

20244

20242

20248

Figure 90.

20246

20244

20248

20246

Figure 91.

20244

20252

Figure 93.

20254

20250

20252

Figure 92.

20256

20254

Figure 94.

20254

20252

20266

20268

Figure 96.

20268

Figure 95.

20266

Figure 97.

20270

20268

20272

20274

Figure 98.

20272

20274

Figure 100.

20272

20274

Figure 99.

−20280

−20278

Figure 101.

−20280

−20282

−20278

Figure 102.

20278−

−20282

Figure 103.

EP 1 171 689 B1

20283

20288

20284

20288

20286

20292

20290

20290

20294

Figure 104.

20290

Figure 105.

20290

20294

20290

Figure 106.

EP 1 171 689 B1

Figure 107.

Figure 108.

Figure 109.

20304
20306
20310
20309
20308
20314
20312
20316

Figure 110.

20304
20306
20310
20308
20314
20312

Figure 111.

20306
20312

Figure 112.

EP 1 171 689 B1

Figure 113.

20318

20322

20324

20328

20326

20328

20330

Figure 114.

20324

20322

20328

20326

Figure 115.

EP 1 171 689 B1

Figure 116.

20332

20336

20334

20338

20336

Figure 117.

20334

20336

20336

Figure 118.

20336

20334

20336

20336

Figure 120.

Figure 121.

20340

Figure 119.

20346

20344

20346

20342

Figure 122.

20344

Figure 123.

Figure 124.

EP 1 171 689 B1

Figure 125.

Figure 126.

Figure 127.

Figure 128.

Figure 129.

Figure 130.

EP 1 171 689 B1

Figure 131.

Figure 132.

20368

Figure 133.

20368

20368

20370

20372

Figure 134.

Figure 135.

Figure 136.

Figure 138.

20374

20376

Figure 137.

20370

20378

20376

Figure 139.

Figure 141.

Figure 140.

20382

20380

Figure 142.

20250

20254

258

20252

20256

**Figure 143.**

**Figure 145.**

20254

20254

20250

20254

20252

20252

**Figure 144.**

EP 1 171 689 B1

Figure 147.

Figure 146.

Figure 148.

Figure 149.

Figure 150.

Figure 151.

20274
20280
20276
20278
20282
20284
20286
20288

Figure 152.

Figure 153.

Figure 154.

Figure 155.

Figure 156.

Figure 157.

3014
3016
3016
3010
3030
3030
3014
3024
3022
3024
3026
3022
3028
3018
3012
3020

Figure 158.

3030
3014
3030
3016
3016
3014
3046
3046
3040
3022
3040
3026
3018
3044
3042
3012

Figure 159.

Figure 160.

Figure 161.

3064

3062

3022

3012

3062

3064

Figure 162.

Figure 163.

Fig. 164.

Figure 166.

30101

3018

3012

A

B

30106

30100

30102

30104

Figure 165.

302

3014

3018

3012

3092

3090

3094

3098

3096

303

Figure 167.

Figure 168.

EP 1 171 689 B1

Figure 169.

Figure 170.

Figure 171.

Figure 172.

Figure 173.

Figure 174.

Fig. 175.

Figure 177.

Figure 176.

Figure 179.

Figure 178.

Figure 180.

Figure 181.

EP 1 171 689 B1

Figure 182.

Figure 183.

EP 1 171 689 B1